# EUROPEAN PATENT APPLICATION

(11) **EP 2 393 318 A1**
(43) Date of publication of application: **07.12.2011**
(21) Application number: 10735659.4
(22) Date of filing: 28.01.2010
(51) Int. Cl.: H04W 24/00, H04B 17/00, H04J 11/00, H04M 1/00, H04W 4/04

(54) **NOTIFYING METHOD AND WIRELESS DEVICE**

(30) Priority: 30.01.2009 JP 2009020969; 30.01.2009 JP 2009020970
(71) Applicant: Sanyo Electric Co., Ltd., Osaka 570-8677 (JP)
(72) Inventor: NAGAI, Makoto, Kakamigahara-City Gifu 504-0912 (JP); NAKAOKA, Ken, Ichinomiya-City Aichi 491-0111 (JP); KAWASE, Kunihiro, Kaizu-City Gifu 503-0403 (JP)
(74) Representative: Glawe, Delfs, Moll
(86) International application number: PCT/JP2010/000518
(87) International publication number: WO 2010/087187

(57) **Abstract**

An RF unit (52) receives periodically signals broadcast by other terminal apparatuses. When the quality of the signal received periodically is more deteriorated than a second threshold value even though the intensity of the signal received periodically is larger than a first threshold value, an identifying unit (72) detects a malfunction in another terminal apparatus from which the signal received periodically by the receiver has been broadcast. A processing unit (56), a modem unit (54), the RF unit (52) and an antenna (50) each broadcasts a signal containing the detection result that the malfunction has been detected and information on a detected location.

## Description

### TECHNICAL FIELD

The present invention relates to a broadcasting technology and, more particularly, to a broadcasting method for sending signals containing predetermined information and a radio apparatus.

### BACKGROUND TECHNOLOGY

Road-to-vehicle communication has been under investigation in an effort to prevent collision accidents of vehicles on a sudden encounter at an intersection. In a road-to-vehicle communication, information on conditions at an intersection is communicated between a roadside unit and an in-vehicle unit. Such a road-to-vehicle communication requires installation of roadside units, which means a great cost of time and money. In contrast to this, a vehicle-to-vehicle (inter-vehicular) communication, in which information is communicated between in-vehicle units, has no need for installation of roadside units. In that case, current position information is detected in real time by GPS (Global Positioning System) or the like and the position information is exchanged between the in-vehicle units. Thus it is determined on which of the roads leading to the intersection the driver's vehicle and the other vehicles are located (See Patent Document 1, for instance).

### PRIOR ART DOCUMENTS

### PATENT DOCUMENTS

[Patent Document 1] Japanese Unexamined Patent Application Publication No. 2005-202913.

### DISCLOSURE OF THE INVENTION

### PROBLEMS TO BE SOLVED BY THE INVENTION

Used in wireless LANs (Local Area Networks) conforming to standards, such as IEEE 802.11, is an access control function called Carrier Sense Multiple Access with Collision Avoidance (CSMA/CA). In such a wireless LAN, therefore, the same wireless channel is shared by a plurality of terminal apparatuses. Such CSMA/CA is subject to conditions involving mutual wireless signals not reaching the targets, namely, carrier sense not functioning, due to the effects of distance between the terminal apparatuses or obstacles attenuating the radio waves and so forth. When the carrier sense does not function, there occur collisions of packet signals transmitted from a plurality of terminal apparatuses. Also, wireless LANs employ the OFDM modulation scheme to achieve faster communication speed.

On the other hand, when a wireless LAN is applied to the inter-vehicular communication, a need arises to transmit information to a large indefinite number of terminal apparatuses, and therefore it is desirable that signals be sent by broadcast. Yet, at an intersection or like places, an increase in the number of vehicles, that is, the number of terminal apparatuses, is considered to cause an increase in the collisions of the packet signals therefrom. In consequence, data contained in the packet signals may not be transmitted to the other terminal apparatuses. If such a condition occurs in the inter-vehicular communication, then the objective of preventing collision accidents of vehicles on a sudden encounter at an intersection will not be attained. Also, the signals broadcast from a malfunctioning terminal apparatus is less likely to be received normally; even though the signals can be received somehow, the contents of the signals are more likely to be erroneous. Here, the case where there exists any malfunctioning terminal includes a case where the transmission system only malfunctions and a case where a data generator is not functioning properly. Furthermore, the broadcasting of such signals which are less likely to be received normally leads to wasteful consumption.

The present invention has been made in view of the foregoing circumstances, and a purpose thereof is to provide a technology for reducing the influence by signals sent from a malfunctioning terminal apparatus.

### MEANS FOR SOLVING THE PROBLEMS

In order to resolve the above problems, a radio apparatus according to one embodiment of the present invention includes: a receiver configured to receive periodically a signal broadcast by another radio apparatus; a detector configured to detect a malfunction in the another radio apparatus from which the signal received periodically by the receiver has been broadcast, when the quality of the signal received periodically by the receiver is more deteriorated than a second threshold value even though the intensity of the signal received periodically by the receiver is larger than a first threshold value; and a broadcasting unit configured to broadcast a signal containing a detection result that the malfunction has been detected by the detector and information on a detected location.

Another embodiment of the present invention relates to a broadcasting method. This method includes: receiving periodically a signal broadcast by another radio apparatus; detecting a malfunction in the another radio apparatus from which the signal received periodically has been broadcast, when the quality of the signal received periodically is more deteriorated than a second threshold value even though the intensity of the signal received periodically is larger than a first threshold value; and broadcasting a signal containing a detection result that the malfunction has been detected and information on a detected location.

Optional combinations of the aforementioned constituting elements, and implementations of the invention in the form of methods, apparatuses, systems, recording media, computer programs and so forth may also be practiced as additional modes of the present invention.

### EFFECT OF THE INVENTION

The present invention reduces the influence by signals sent from a malfunctioning terminal apparatus.

### BRIEF DESCRIPTION OF THE DRAWINGS

FIG. 1 shows a structure of a communication system according to an exemplary embodiment of the present invention.
FIG. 2 shows a structure of an access control apparatus of FIG. 1.
FIGS. 3A to 3D show formats of frames generated by a frame generator of FIG. 2.
FIGS. 4A and 4B show formats of OFDM symbol used in the communication system of FIG. 1.
FIG. 5 shows a structure of a terminal apparatus mounted on a vehicle of FIG. 1.
FIG. 6 shows an operational overview of the communication system of FIG. 1.
FIG. 7 is a flowchart showing a procedure in which control information is broadcast by the access control apparatus of FIG. 2.
FIG. 8 is a flowchart showing a procedure in which a malfunctioning terminal apparatus is detected by the access control apparatus of FIG. 2.
FIG. 9 is a flowchart showing a procedure in which data is broadcast by the terminal apparatus of FIG. 5.
FIG. 10 shows a structure of an access control apparatus according to a modification.
FIG. 11 shows an operational overview of a communication system according to a modification.
FIG. 12 is a flowchart showing a procedure in which an empty slot is notified by the access control apparatus of FIG. 10.
FIG. 13 is a flowchart showing a procedure in which a collision slot is notified by the access control apparatus of FIG. 10.
FIG. 14 is a flowchart showing a procedure in which data is transmitted by a terminal apparatus according to a modification.
FIG. 15 shows a structure of a communication system according to another modification.
FIG. 16 shows a structure of a control access control apparatus of FIG. 15.
FIGS. 17A to 17D show formats of frames generated by a frame generator of FIG. 16.
FIGS. 18A and 18B show formats of OFDM symbol used in the communication system of FIG. 15.
FIG. 19 shows a structure of a terminal apparatus mounted on a vehicle of FIG. 15.
FIG. 20 shows an operational overview of the communication system of FIG. 15.
FIG. 21 is a flowchart showing a procedure in which control information is broadcast by the access control apparatus of FIG. 16.
FIG. 22 is a flowchart showing a procedure in which an inappropriate apparatus is detected by the access control apparatus of FIG. 16.
FIG. 23 is a flowchart showing a procedure in which data is broadcast by the terminal apparatus of FIG. 19.
FIG. 24 shows a structure of an access control apparatus according to still another modification.
FIG. 25 shows an operational overview of a communication system according to still another modification.
FIG. 26 is a flowchart showing a procedure in which an empty slot is notified by the access control apparatus of FIG. 24.
FIG. 27 is a flowchart showing a procedure in which a collision slot is notified by the access control apparatus of FIG. 24.
FIG. 28 is a flowchart showing a procedure in which data is transmitted by a terminal apparatus according to still another modification.

### BEST MODE FOR CARRYING OUT THE INVENTION

The present invention will be outlined before it is explained in detail. Exemplary embodiments of the present invention relate to a communication system carrying out data communication between terminal apparatuses installed in vehicles. A terminal apparatus transmits, by broadcast, packet signals containing information such as the traveling speed and position of a vehicle (hereinafter referred to as "data"). And the other terminal apparatuses receive the packet signals and recognize the approach or the like of the vehicle based on the data. Note here that the terminal apparatuses employ the OFDM modulation scheme to achieve faster communication speed. Under these circumstances, an increase in the number of terminal apparatuses at an intersection or like place increases the probability of packet signals occurring. To cope with it, the communication system according to the present exemplary embodiment executes the following processes.

The communication system according to the present exemplary embodiment includes an access control apparatus in addition to a plurality of terminal apparatuses, and the access control apparatus is installed at an intersection, for instance. The access control apparatus repeatedly specifies a frame containing a plurality of slots. Note that one or more of the plurality of slots contained in each frame are reserved and secured as control slots. Also, the access control apparatus identifies control slots to be used, and adds information on timings of the control slots and information with which to identify said access apparatus (hereinafter referred to as "identification information) to control information. Also, the access control apparatus transmits, by broadcast, a packet signal containing the control information (hereinafter referred to sometimes as "control information" also) using the control slots. Here, the information on timings of the control slots is, for instance, information on which slot number, starting from the beginning of a frame, the control slot is assigned to (this information will be referred to as "control slot information").

A terminal apparatus receives the control information and thereby generates a frame corresponding to the control information. The thus generated frame contains a plurality of slots as well. Also, the terminal apparatus recognizes slots, in the plurality of slots contained in the frame, which are other than the control slots. Note that in the description of terminal apparatuses given hereunder the slots sometimes mean those excluding the control slots. Each terminal apparatus performs carrier sensing on a plurality of slots, respectively, and thereby it estimates a slot which is not used by other terminal terminals (hereinafter referred to as "empty slot" or "unused slot"). There may be a plurality of such empty slots. The terminal apparatus selects at random one slot to be used for the transmission of data from among empty slots. The terminal apparatus transmits, by broadcast, a packet signal containing data (hereinafter referred to sometimes as "data" also) using the selected slot. The terminal apparatus uses a relatively identical slot for a plurality of frames.

Note here that the access control apparatus has no direct involvement in data communication between terminal apparatuses, that is, the access control apparatus does not directly specify the slot to be used in the data communication. In other words, the access control apparatus only conveys the construction of a frame containing slots to be used by a plurality of terminal apparatus. The terminal apparatus performs data communication with timings of slots contained in the frame notified by the access control apparatus. That is, the access control apparatus controls the communications between a plurality of terminal apparatuses.

It is to be noted that since the control information is also transmitted in a single slot, there are chances that the data transmitted from a terminal apparatus incapable of receiving the control information may collide with the control information. In consequence, if the other terminal apparatuses cannot receive the control information, then there arises a difficulty of carrying out the aforementioned processes. To cope with this situation, the OFDM signals used in transmitting data have some of the subcarriers as null carriers in which no data is contained (these subcarriers being hereinafter referred to as "identification carriers"). On the other hand, the OFDM signals used in transmitting control information have signals placed in the identification carriers, too. Hence, even when there is a collision between data and control information, the terminal apparatus can detect the presence of control information by observing the signal components of the identification carrier.

Further, if a plurality of access apparatuses are installed at an intersection where they are located close to each other, interference between them must be taken into consideration. If, for instance, the control information transmitted by broadcast from the plurality of access control apparatuses interfere with each other, the terminal apparatuses may not be able to receive the control information and therefore the aforementioned operations will not be achieved. Though such interference can be avoided by assigning a different frequency channel to each access control apparatus, another separate structure to reduce the interference will be needed if no other frequency channel can be provided. To cope with this, a plurality of control slots are reserved and secured as described above. Each access control apparatus performs carrier sensing on a plurality of control slots, respectively, and thereby it selects one control slot and transmits, by broadcast, the control information using the selected control slot.

Even in such a case as defined above, there are cases where a terminal apparatus is not working properly. As long as the terminal apparatus cannot transmit data because of malfunction, there is not much adverse effect on other terminal apparatuses. However, if the malfunctioning terminal apparatus transmits data, the quality of which has degraded, data with an erroneous content, and so forth, the other terminal apparatuses will be incapable of receiving the data and/or acquire the erroneous information and therefore there will be a considerable adverse effect thereon. Here, the data the quality of which has degraded corresponds to data whose distortion has become greater, data whose modulation accuracy has degraded, and so forth. In order to cope with this, a terminal apparatus and/or the access control apparatus detect the presence of a terminal apparatus which is not working properly (hereinafter referred to as "malfunctioning terminal apparatus" also), based on the received signals. If the presence of a malfunctioning terminal apparatus is detected, the terminal apparatus and the access control apparatus broadcast it by adding the detection result that the malfunctioning terminal apparatus has been detected, information on the detected position, slots being used, and the like to the control information and data. Terminal apparatuses that have received this information recognize the presence of the malfunctioning terminal apparatus and ignore the data received in slots used by the malfunctioning apparatus.

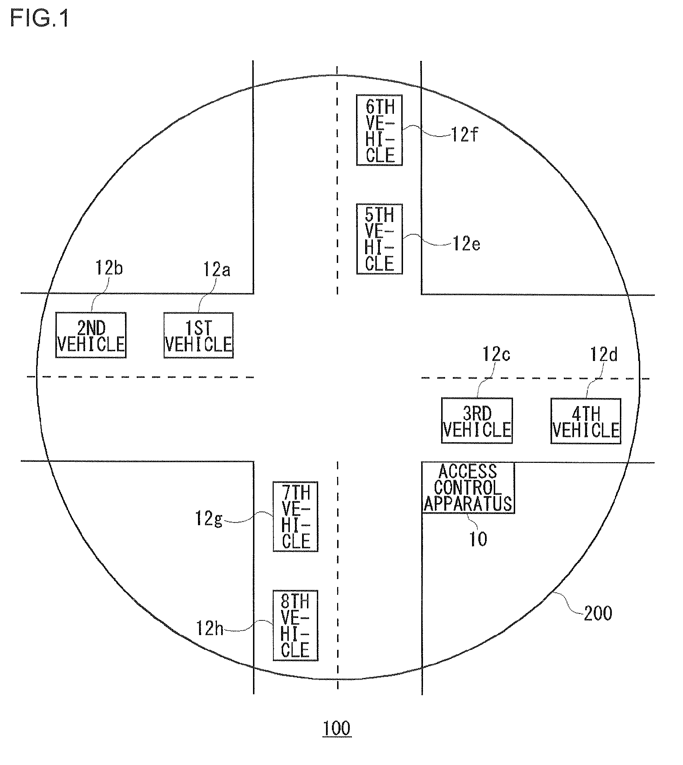

FIG. 1 shows a structure of a communication system 100 according to an exemplary embodiment of the present invention. FIG. 1 corresponds to a case thereof at an intersection viewed from above. The communication system 100 includes an access control apparatus 10 and a first vehicle 12a, a second vehicle 12b, a third vehicle 12c, a fourth vehicle 12d, a fifth vehicle 12e, a sixth vehicle 12f, a seventh vehicle 12g, and an eighth vehicle 12h, which are generically referred to as "vehicle 12" or "vehicles 12". It is to be noted that each vehicle 12 has a not-shown terminal apparatus installed therein. Also, an area 200 is formed by the access control apparatus 10.

As shown in FIG. 1, a road extending in the horizontal, or left-right, direction and a road extending in the vertical, or up-down, direction in FIG. 1 intersect with each other in the central portion thereof. Note here that the upper side of FIG. 1 corresponds to the north, the left side thereof the west, the down side thereof the south, and the right side thereof the east. And the portion where the two roads intersect each other is the intersection. The first vehicle 12a and the second vehicle 12b are advancing from left to right, while the third vehicle 12c and the fourth vehicle 12d are advancing from right to left. Also, the fifth vehicle 12e and the sixth vehicle 12f are advancing downward, while the seventh vehicle 12g and the eighth vehicle 12h are advancing upward.

The terminal apparatus installed in each of the vehicles 12 acquires data and transmits, by broadcast, a packet signal containing the data. Here, before explaining exemplary embodiments of the present invention, a description will be given of an operation of a terminal apparatus which is compatible with a known wireless LAN, i.e., CSMA/CA. Each terminal apparatus transmits data by broadcast when it has determined by executing carrier sense that transmission is possible. Consequently, there are chances of data from a plurality of terminal apparatuses colliding with each other. Also, as the number of terminal apparatuses increases, there will be greater probability of collisions occurring. In particular, at locations like intersections, the likelihood of data collision is greater despite the fact that the likelihood of vehicles 12 colliding with each other is also great. This means failed utilization of data in spots where data is in the greatest demand.

Therefore, the communication system 100 places an access control apparatus 10 at each intersection. The access control apparatus 10 repeatedly generates a frame containing a plurality of slots, based on the signals received from not-shown GPS satellites. Here, one or more of the plurality of slots correspond to the control slots. The access control apparatus 10 adds the control slot information and the identification information to the control information. Further, the access control apparatus 10 broadcasts the control information, using control slots. The selection of the control slot(s) will be discussed later.

A plurality of terminal apparatuses receive the control information broadcast by the access control apparatus 10 and generate frames based on the control information. As a result, the frame generated by each of the plurality of terminal apparatuses is synchronized with the frame generated by the access control apparatus 10. Also, slots generated by the respective plurality of terminal apparatuses are synchronized with each other. Each terminal apparatus performs carrier sensing in a plurality of slots, respectively, and estimates empty slots. Also, the terminal apparatus randomly selects one slot out of the empty slots. Also, the terminal apparatus broadcasts data using the selected slot. The terminal apparatus continues to select the same slots in corresponding timing in each frame, for a plurality of frames. It is to be appreciated that the terminal apparatus may broadcast data even when the terminal apparatus is not receiving control information. The terminal apparatus which has received data from the other terminal apparatuses recognizes, based on the data, the presence of vehicles 12 that are carrying the other terminal apparatuses.

Note here that both the control information broadcast from the access control apparatus 10 and the data broadcast from the terminal apparatuses use OFDM signals. However, it is not the same subcarriers in which the control information and the data are placed. The data is not placed in the aforementioned identification carriers. On the other hand, identification information is placed not only in the subcarriers where the data is placed but also in the identification carriers. As a result, even when there is a collision between data and identification information, the terminal apparatus can detect the presence of control information by observing the signal components of identification carriers. It should be noted that the aforementioned detection of entry into the area 200 by the terminal apparatus may be made relative to the identification carriers.

Assume in FIG. 1 that a terminal apparatus installed in the seventh vehicle 12g is malfunctioning. If a transmission system of this terminal apparatus malfunctions, the distortion of data broadcast from the terminal apparatus will be large. Also, if a function by which to generate data of the terminal apparatus malfunctions, data will contain erroneous information therein. Other terminal apparatuses cannot receive such data or it is preferable that they should not trust the information even if the data can be actually received. If, on the other hand, those other terminal apparatuses recognize the presence of the malfunctioning apparatus beforehand, they can take measured not to use slots near the slots used by the faulty terminal apparatus as well.

The other terminal apparatuses and the access control apparatus 10 determine if the data has been sent from the faulty terminal apparatus, based on the received data. If the data is data sent from the faulty terminal apparatus, those terminal apparatuses and the access control apparatus that have detected the faulty terminal apparatus will broadcast the thus detected result by adding the fact about it, the detected location and slots used by the faulty terminal apparatus to the control information. Terminal apparatuses that receive this fact through the control information recognize the presence of the faulty terminal apparatus. A method for determining whether the received data is sent from the malfunctioning terminal apparatus or not will be discussed later.

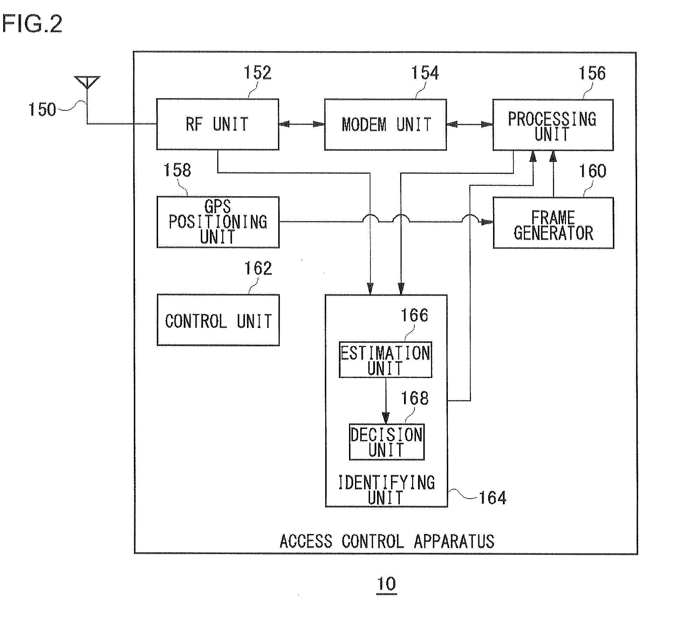

FIG. 2 shows a structure of the access control apparatus 10. The access control apparatus 10 includes an antenna 150, an RF unit 152, a modem unit 154, a processing unit 156, a GPS positioning unit 158, a frame generator 160, a control unit 162, and a identifying unit 164. The identifying unit 164 includes an estimation unit 166 and a decision unit 168. The GPS positioning unit 158 receives signals from not-shown GPS satellites and acquires information on the time of day based on the received signals. It should be noted that known art can be used for the acquisition of information on the time of day and therefore the description thereof is omitted here. The GPS positioning unit 158 outputs the information on the time of day to the frame generator 160.

The frame generator 160 acquires information on the time of day from the GPS positioning unit 158. The frame generator 160 generates a plurality of frames based on the information on the time of day. For example, the frame generator 160 generates ten "100 msec" frames by dividing a duration of "1 sec" into 10 parts from the timing of "0 msec". Frames are thus defined and specified repeatedly through the repetition of this process. Also, the frame generator 160 generates a plurality of slots by dividing each frame into a plurality of parts. For example, dividing a frame into 200 parts generates 200 slots with each slot being "500 µsec" long.

Here, one or more of a plurality of slots contained in each frame is/are reserved as "control slots". For example, first five slots from the beginning of 200 slots contained in each frame are control slots. Also, the control slot is a slot used when the access control apparatus 10 broadcasts control information. The remaining slots of the plurality of slots in each frame are reserved and secured for the communications between not-shown terminal apparatuses. As previously indicated, since the communication system 100 employs the OFDM modulation scheme, each slot is so specified as to be composed of a plurality of OFDM symbols. Also, an OFDM symbol comprises a guard interval (GI) and a valid symbol. Note that a guard time may be provided in the front portion and the rear portion of each slot. It is to be noted also that a certain group of or combination of a plurality of OFDM symbols contained in a slot is equivalent to the packet signal mentioned earlier.

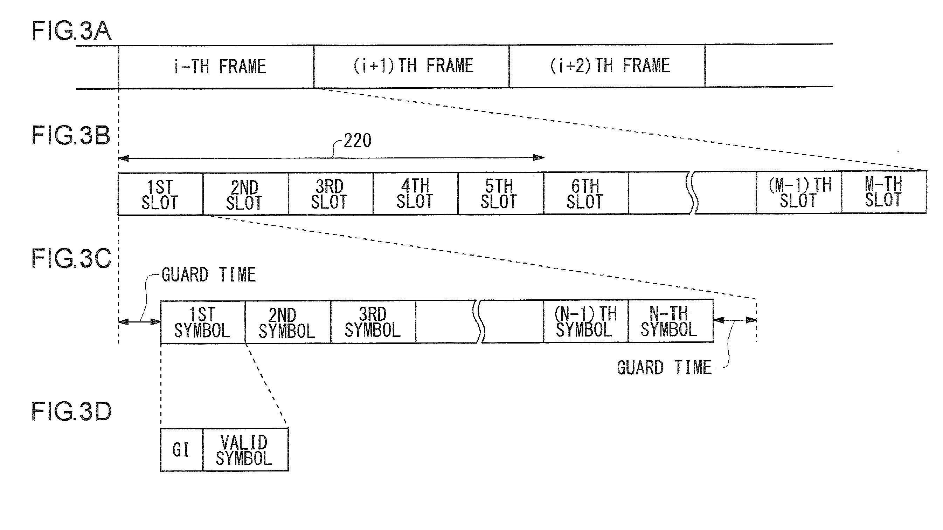

FIGS. 3A to 3D show the formats of frames generated by the frame generator 160. FIG. 3A shows a structure of frames. As shown in FIG. 3A, a plurality of frames, such as i-th frame to (i+2)th frame, are so specified as to be repeated. Also, the duration of each frame is "100 msec", for instance. FIG. 3B shows a structure of a single frame. As shown in FIG. 3B, a single frame consists of M units of slots. For example, M is "200" and the duration of each slot is "500 µsec". Also, slots assigned to the beginning part of each frame correspond to the control slots, and an interval where the control slots are assigned is indicated as a control region 220.

In this case, five slots which are a first slot to a fifth slot are contained in the control region 220 as the control slots. FIG. 3C shows a structure of a single slot. As shown in FIG. 3C, a guard time may be provided in the front portion and the rear portion of each slot. And the remaining duration of the slot consists of N units of OFDM symbols. FIG. 3D shows a structure of each OFDM symbol. As shown in FIG. 3D, each OFDM symbol consists of a GI and a valid symbol. Let us now refer back to FIG. 2.

The RF unit 152 receives through the antenna 150 a packet signal transmitted in communication between the other terminal apparatuses (not shown) in each slot, as a receiving processing. Here, if it is specified in a manner such that the frame containing a plurality of slots as in FIG. 3A is repeated, the data is broadcast in cycles of frames, using a slot selected from among the plurality of slots. Also, data contains the identification number of a terminal apparatus which is a broadcast source. Accordingly, the RF unit 152 receives data from the terminal apparatus in cycles of frames. The RF unit 152 performs a frequency conversion on the packet signal of a radiofrequency received through the antenna 150 and thereby generates a packet signal of baseband. Further, the RF unit 152 outputs the baseband packet signal to the modem unit 154. Generally, a baseband packet signal is formed of an in-phase component and a quadrature component, and therefore it should be represented by two signal lines. However, it is represented by a single signal line here to make the illustration clearer for understanding.

Also, the RF unit 152 includes an LNA (Low Noise Amplifier), a mixer, an AGC (Automatic Gain Control) unit, and an A-D conversion unit. As a transmission processing, the RF unit 152 performs a frequency conversion on the baseband packet signal inputted from the modem unit 154 and thereby generates a radiofrequency packet signal in each slot. Further, the RF unit 152 transmits, through the antenna 150, the radiofrequency packet signal. The RF unit 152 also includes a PA (Power Amplifier), a mixer, and a D-A conversion unit.

The modem unit 154 demodulates the baseband packet signal fed from the RF unit 152, as a receiving processing. Further, the modem unit 154 outputs the demodulation result to the processing unit 156. Also, the modem unit 154 modulates the data fed from the processing unit 156, as a transmission processing. Further, the modem unit 154 outputs the modulation result to the RF unit 152 as a baseband packet signal. It is to be noted here that the communication system 100 is compatible with the OFDM modulation scheme and therefore the modem unit 154 performs FFT (Fast Fourier Transform) as a receiving processing and performs IFFT (Inverse Fast Fourier Transform) as a transmission processing also.

The processing unit 156 receives information on the timing of a frame and the timings of slots contained in the frame, from the frame generator 160. The processing unit 156 identifies the timings of control slots contained in a plurality of slots contained in the frame. In the case of FIG. 3A, the five control slots contained in the control region 220 are identified. The processing unit 156 performs carrier sensing on each slot via the antenna 150, the RF unit 152 and the modem unit 154. Known art can be used as the carrier sensing and therefore the description thereof is omitted here. It is appreciated that the processing unit 156 may receive the received signals from the RF unit 152 without the signals being passed through the modem unit 154. The processing unit 156 selects one control slot out of the five control slots based on the carrier sensing result. For example, the control slot having the minimum interference power is selected.

The processing unit 156 generates control slot information on the selected control slot. Also, the processing unit 156 generates control information by adding the control slot information and the identification information thereto. The processing unit 156 assigns the control information to the selected control slot. The processing unit 156 outputs the control information to the modem unit 154, using the assigned control slot. Transmitting the control information using the control slot assigned by the communication system 100 is equivalent to notifying the timing of control slots in a frame. Since the relative position of control slots in a frame is contained in the control slot information, said transmitting the control information using the control slot assigned by the communication system 100 is also equivalent to notifying the timing of the frame. Here, the timing of frame corresponds to the timing to be synchronized when each terminal apparatus broadcasts data in the communications between the terminal apparatuses.

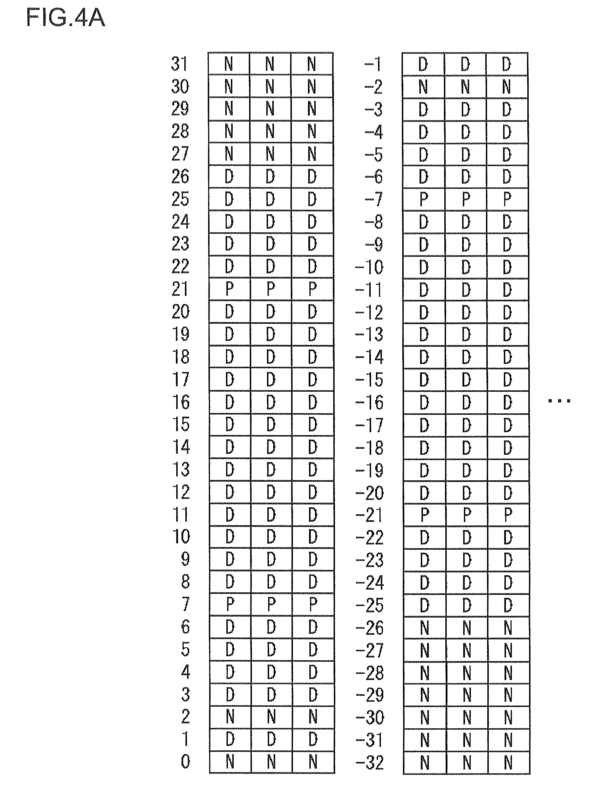

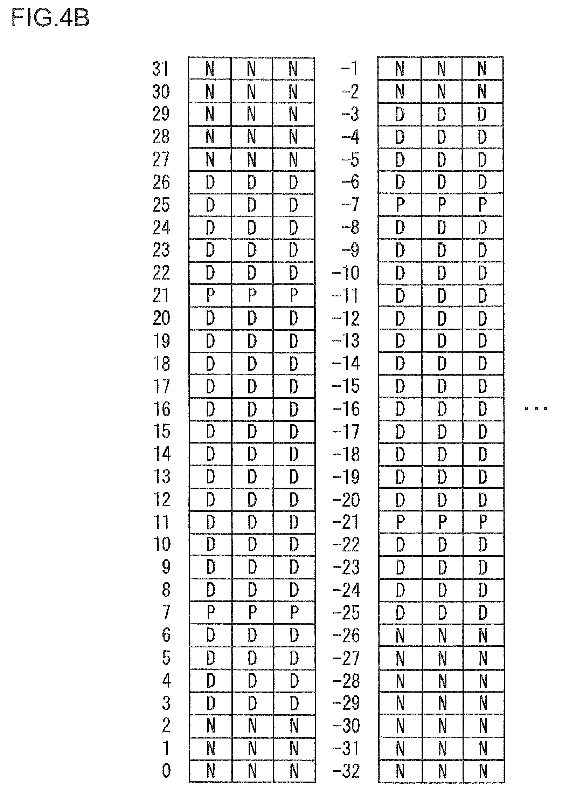

As described above, the communication system 100 is compatible with the OFDM modulation scheme and therefore the processing unit 156 generates the control information as an OFDM signal. Note here that the OFDM signals are also used for the communications between a not-shown plurality of terminal apparatuses. A description is given herein by comparing an OFDM signal that has the control information assigned (hereinafter this is sometimes called "control information" also) with an OFDM signal that has data assigned (hereinafter this is sometimes called "data" also). FIGS. 4A and 4B illustrate formats of OFDM symbols used in the communication system 100. FIG. 4A corresponds to control information, whereas FIG. 4B corresponds to data.

In both FIG. 4A and FIG. 4B, the vertical direction represents the frequency, whereas the horizontal direction represents time. The numbers "31", "30", ..., "-32" are indicated from top along the vertical direction, and these are the numbers assigned to identify subcarriers (hereinafter referred to as "subcarrier numbers"). In OFDM signals, the frequency of a subcarrier whose subcarrier number is "31" is the highest, whereas the frequency of a subcarrier whose subcarrier number is "-32" is the lowest. In FIG. 4A and FIG. 4B, "D" corresponds to a data symbol, "P" a pilot symbol, and "N" a null.

What are common to the control information and the data are the subcarrier numbers "31" to "27", "2", "0", and "-2", and the subcarrier numbers "-26" to "-32" which are all null. In the control information, the subcarrier numbers "26" to "3", "-3" to "-25" are also used in data, and the use of symbols is the same for both the control information and the data. In the control information, on the other hand, the subcarrier numbers "1" and "-1" are not used for data. These correspond to the aforementioned identification carriers. That is, the identification carrier is assigned to a subcarrier near the center frequency of an OFDM signal. In the control information, a guard band is provided between a subcarrier used also for data and the identification carrier, namely between the subcarrier number "2" and the subcarrier number "-2". The subcarriers of the subcarrier number "-2" through the subcarrier number "2" may be collectively called "identification carrier" or "identification carriers".

Here, the processing unit 156 assigns the information on frames and the slot numbers to the identification carrier. Also, the processing unit 156 may preferentially assign information having higher degrees of importance to the identification carrier. Also, a known signal is assigned to an OFDM symbol which is located anterior to the packet signal. Such a known signal is used for AGC (Automatic Gain Control) or used to estimate the channel characteristics. The processing unit 156 may assign a known signal to the identification carrier over a partial period of a predetermined slot. Such a known signal is used as a unique word (UW), for example. Let us now refer back to FIG. 2.

The modem unit 154 and the RF unit 152 transmit, by broadcast, the control information generated by the processing unit 156 from the antenna 150, using the control slots. One of the destinations of the control information is a terminal apparatus. The terminal apparatus having received the control information recognizes the timing of each slot and uses at least one of the remaining slots reserved for the communications between terminal apparatuses. If the terminal apparatus broadcasts the data over a plurality of frames, the terminal apparatus will use the same slots in corresponding timing in each frame.

The estimation unit 166 receives periodically the data received by the RF unit 152. As described earlier, a terminal apparatus repeatedly uses slots having the same relative timings in a given frame, so that the estimation unit 166 repeatedly receives data from the same terminal apparatus using the same slots having the same relative timings in a given frame. Also, based on the data received repeatedly, the estimation unit 166 estimates that a terminal apparatus which is a broadcast source is moving. More specifically, the estimation unit 166 calculates the received power of the received data and monitors a change in the receive power over time. If the variation is larger than a predetermined changing threshold value, the estimation unit 166 will estimate that the terminal apparatus is moving. When the estimation unit 166 detects a moving terminal apparatus, the estimation unit 166 outputs the fact about the moving terminal apparatus to the decision unit 168. An average value of the received powers within a frequency domain of the OFDM symbols is preferably used as the received power, and it may be subjected to a moving average in the time domain thereof as well.

The decision unit 168 receives the notification about the moving terminal apparatus, from the estimation unit 166. The decision unit 168 receives data received by the RF unit 152 and data demodulated by the modem unit 154 for the terminal apparatus corresponding to the notification, in cycles of frames. The data received by the RF unit 152 may be radiofrequency data or baseband data. The decision unit 168 derives the received power of the data received periodically, over a predetermined period of time. Also, the decision unit 168 compares the received power with a threshold value for power. On the other hand, the decision unit 168 derives the quality of data received periodically, over a predetermined period of time. The quality herein means an error rate and EVM (Error Vector Magnitude), for instance. The decision unit 168 compares the quality with a threshold value for quality. If the received power is larger than the threshold value for power but the quality is more deteriorated than the threshold value for quality, the decision unit 168 will detect a malfunction in the terminal apparatus which is the broadcast source of the data. When a malfunctioning terminal apparatus has been detected, the decision unit 168 outputs a detection result that the malfunctioning terminal apparatus has been detected, to the processing unit 156.

The processing unit 156 adds (1) the detection result indicating that the malfunctioning terminal apparatus has been detected, (2) information on the detected location, and (3) information on slots being used by the malfunctioning terminal apparatus, to the control information. The detection result indicating that the malfunctioning terminal apparatus has been detected may include the identification numbers. The detected location corresponds to the installation position of the access control apparatus 10. The information on slots being used by the malfunctioning terminal corresponds to the slot number counted from the beginning of a frame. As described above, such control information is transmitted, by broadcast, from the modem unit 154, the RF unit 152, and the antenna 150. The control unit 162 controls the processing of the access control apparatus 10 as a whole.

These structural components may be implemented hardwarewise by elements such as a CPU, memory and other LSIs of an arbitrary computer, and softwarewise by memory-loaded programs or the like. Depicted herein are functional blocks implemented by cooperation of hardware and software. Therefore, it will be obvious to those skilled in the art that the functional blocks may be implemented by a variety of manners including hardware only, software only or a combination of both.

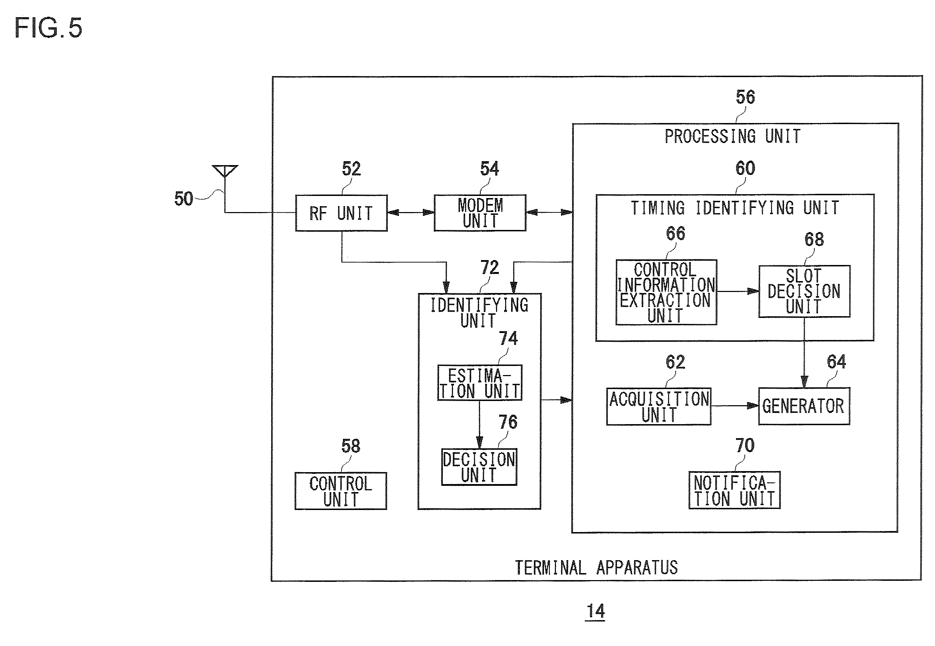

FIG. 5 shows a structure of a terminal apparatus 14 mounted on a vehicle 12. The terminal apparatus 14 includes an antenna 50, an RF unit 52, a modem unit 54, a processing unit 56, a control unit 58, and an identifying unit 72. The processing unit 56 includes a timing identifying unit 60, an acquisition unit 62, a generator 64, and a notification unit 70. The timing identifying unit 60 includes a control information extraction unit 66 and a slot decision unit 68. The identifying unit 72 includes an estimation unit 74 and a decision unit 76. The antenna 50, the RF unit 52 and the modem unit 54 carry out the processings similar to those carried out by the antenna 150, the RF unit 152 and the modem unit 154 of FIG. 2, respectively. Thus, the repeated description thereof is omitted here.

The acquisition unit 62 includes a GPS receiver, a gyroscope, a vehicle speed sensor, and so forth all of which are not shown in FIG. 5. The acquisition unit 62 acquires the present position, traveling direction, traveling speed and so forth of a not-shown vehicle 12, namely the vehicle 12 carrying the terminal apparatus 14, based on data supplied from the aforementioned not-shown components of the acquisition unit 62. The present position thereof is indicated by the latitude and longitude. Known art may be employed to acquire them and therefore the description thereof is omitted here. The acquisition unit 62 outputs the thus acquired information to the generator 64.

The control information extraction unit 66 receives the demodulation result fed from the modem unit 54. of the demodulation result, the control information extraction unit 66 monitors a part of subcarriers corresponding to the identification carrier. If valid data is contained in the part of subcarriers corresponding to the identification carrier, the control information extraction unit 66 will recognize that the control information extraction unit 66 is receiving a slot containing the control information therein, namely a control slot. Also, the control information extraction unit 66 establishes the synchronization between frames and slots when the timing with which the slot containing the control information is received is used as a reference.

More specifically, the control information extraction unit 66 identifies the control slots where the received demodulation result is assigned, based on the control slot information contained in the control information. Then the control information extraction unit 66 generates frames with this identified control slot as a reference. If the control information corresponds to a third slot as shown in the FIG. 3B, the control information extraction unit 66 will generate frames with the third slot as a reference. In other words, the control information extraction unit 66 generates frames each containing a plurality of slots in such a manner as to synchronize with the frame corresponding to the control slot information. This corresponds to that the control information extraction unit 66 extracts, from the control information, information on the timing of a frame and the timings of slots contained in the frame. The control information extraction unit 66 outputs information on the thus generated frames to the slot decision unit 68.

The slot decision unit 68 measures, by carrier sensing, the interference power for each of a plurality of slots contained in the frame generated by the control information extraction unit 66. Also, the slot decision unit 68 estimates empty slots based on the interference powers. More specifically, the slot decision unit 68 stores a predetermined threshold value in advance, and compares the interference power at each slot against the threshold value. The slot decision unit 68 estimates slots whose interference powers are below the threshold value, as empty slots, and randomly identifies one of the estimated empty slots. Note that the slot decision unit 68 may identify a slot whose interference power is the minimum. As a result, the slot decision unit 68 determines a slot which is synchronized with the control slot information and which arrives in cycles of frames.

The generator 64 generates data in such manner as to add the information, acquired by the acquisition unit 62, to the data. That is, the generator 64 generates data that contains the measured present position. The generator 64 transmits, by broadcast, the data via the modem unit 54, the RF unit 52, and antenna 50, using the slot identified by the slot decision unit 68.

The estimation unit 74 and the decision unit 76 carry out the processings similar to those carried out by the estimation unit 166 and the decision unit 168 of FIG. 2, respectively. The estimation unit 74 may execute the following processing instead of the processing carried out by the above-described estimation unit 74. If the variation in the received power falls within a predetermined range, it is assumed by the estimation unit 74 that a terminal apparatus 14, which is the broadcast source, is travelling near the own terminal apparatus 14 along the same direction as the own terminal apparatus 14. If the terminal apparatus 14 which is the broadcast source is determined to be a malfunctioning terminal apparatus, the decision unit 76 will have the generator 64 add the result indicating that the malfunctioning terminal apparatus has been determined by the decision unit 76, information on the detected location, and information on slots being used by the malfunctioning terminal apparatus. Note that the information on the detected location is supplied from the acquisition unit 62.

The notification unit 70 acquires the data sent from not-shown other terminal apparatuses 14 and conveys the approach or the like of the not-shown other vehicles to a driver via a monitor or speaker according to the content of the data, in each slot. At the same time, if the result indicating that a malfunctioning terminal apparatus 14 has been detected is contained in the data and/or control information, the notification unit 70 will convey the result. For example, the notification unit 70 displays a warning message containing characters like "vehicle is possibly approaching". Or, if the result indicating that a malfunctioning terminal apparatus 14 has been detected is contained in the data and/or control information, the notification unit 70 may skip conveying the content of data corresponding to the information on the detection of this faulty terminal apparatus. The processing performed by the notification unit 70 is not limited thereto. Further, the processing unit 156 identifies slots based on the information on the slots being used by the faulty terminal apparatus, and skips the receiving processing. The control unit 58 controls the entire operation of the terminal apparatus 14.

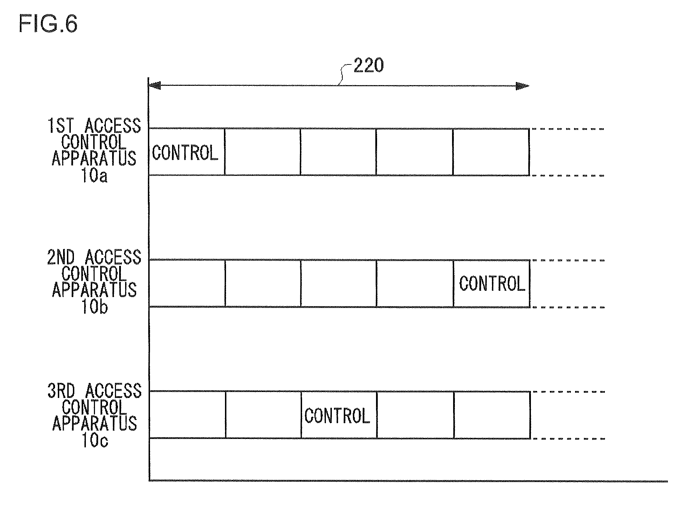

An operation of the communication system 100 configured as above is now described. FIG. 6 shows an operational overview of the communication system 100. The horizontal direction of FIG. 6 corresponds to time, and the first access control apparatus 10a to the third access control apparatus 10c are indicated along the vertical direction of FIG. 6. Only the control region 220 in FIG. 3B is shown in FIG. 6. As described earlier, assumed herein that five control slots are assigned to the control region 220. "Control" in FIG. 6 indicates control information. The first access control apparatus 10a uses the leading control slot. The second access control apparatus 10b uses the fifth control slot. The third access control apparatus 10c uses the third control slot. As a result, the interference among the control information transmitted by broadcast from the respective access control apparatuses 10 is reduced.

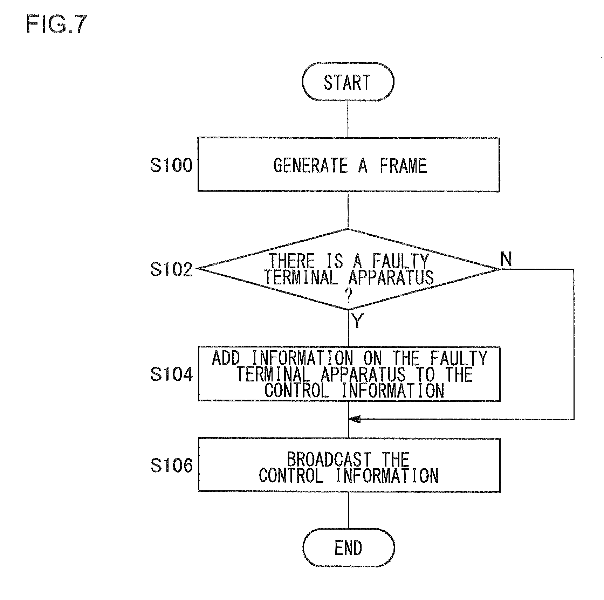

FIG. 7 is a flowchart showing a procedure in which control information is broadcast by the access control apparatus 10. The frame generator 160 generates frames (S100). If the identifying unit 164 detects the presence of a malfunctioning terminal apparatus 14 (Y of S102), the processing unit 156 will add information on the malfunctioning terminal apparatus 14 to the control information (S104). If the identifying unit 164 does not estimate the presence of a malfunctioning terminal apparatus 14 (N of S102), Step S104 will be skipped. The processing unit 156, the modem unit 154, the RF unit 152 and the antenna 150 broadcast the control information (S106).

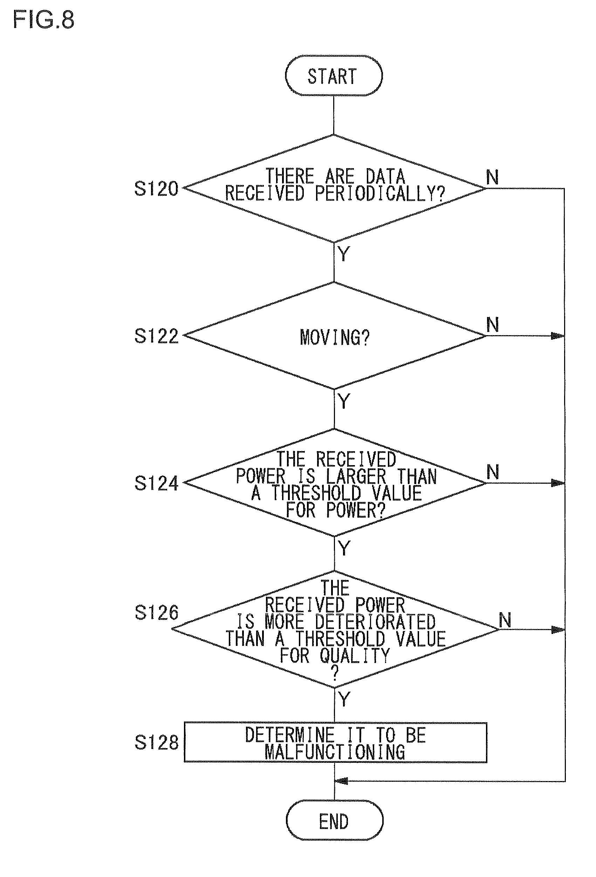

FIG. 8 is a flowchart showing a procedure in which a malfunctioning terminal apparatus is detected by the access control apparatus 10. This corresponds to the processing of Step S102 in FIG. 7. If the processing unit 156 receives data periodically (Y of s120) and if the estimation unit 166 estimates that the terminal apparatus 14 is moving (Y of S122), the received power is larger than the threshold value for power (Y of S124) and the quality is more deteriorated than the threshold value for quality (Y of S126), the decision unit 168 will determine that the terminal apparatus 14 is malfunctioning (S128). If, on the other hand, the processing unit 156 is not receiving data periodically (N of S120), or if the estimation unit 166 estimates that the terminal apparatus 14 is not moving (N of S122), or the received power is not larger than the threshold value for power (N of S124) and the quality is not more deteriorated than the threshold value for quality (N of S126), the processing will be terminated.

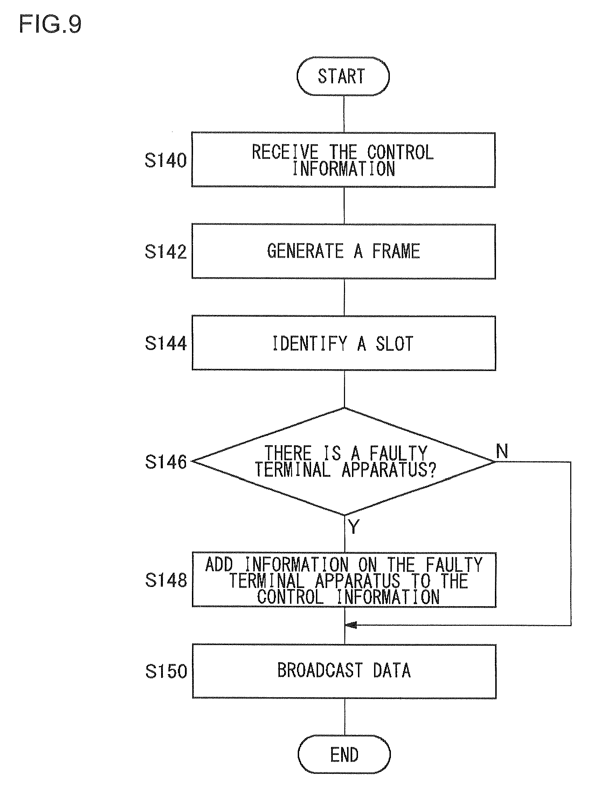

FIG. 9 is a flowchart showing a procedure in which data is broadcast by the terminal apparatus 14. The control information extraction unit 66 receives the control information (S140) and generates frames (S142) before the slot decision unit 68 identifies slots (S144). If the identifying unit 72 detects the presence of a malfunctioning terminal apparatus 14 (Y of S146), the generator 64 will add information on the malfunctioning terminal apparatus 14 to the data (S148). If, on the other hand, the identifying unit 72 does not estimate the presence of a malfunctioning terminal apparatus 14 (N of S146), Step S148 will be skipped. The processing unit 56, the modem unit 54, the RF unit 52 and the antenna 50 broadcast the control information (S150).

A modification will now be described. Similar to the exemplary embodiments, the modification relates to a communication system 100 including the access control apparatus 10 and the terminal apparatuses 14. In the exemplary embodiments, the access control apparatus 10 broadcasts the timing of a frame and the detection result of a malfunctioning terminal apparatus 14, using the control information. According to the modification, on the other hand, the access control apparatus 10 broadcasts frames by adding still another information to the control information for the purpose of further reducing the collision probability of data. The access control apparatus 10 identifies slots not used in communication among a plurality of terminal terminals (hereinafter referred to as "empty slots" or "unused slots") by measuring the received power in each slot. Note that those which may be assigned as the empty slots are those excluding the control slots. The access control apparatus 10 identifies slots having any collision (hereinafter referred to as "collision slots") by also measuring in each slot for any collision of packet signals transmitted by the plurality of terminal apparatuses. Note also that those which may be identified as the collision slots are those excluding the control slots.

The access control apparatus 10 also adds information on the identified empty slots and collision slots to the control information. The terminal apparatus 14 estimates empty slots based on the control information, and randomly selects a slot out of the empty slots. Further,
the terminal apparatus 14 transmits, by broadcast, the data using the selected slot. The communication system 100 according to the modification is of similar type to those described in conjunction with FIG. 1 and FIG. 5. A description is given here centering around features different from those described in conjunction with FIG. 1 and FIG.5.

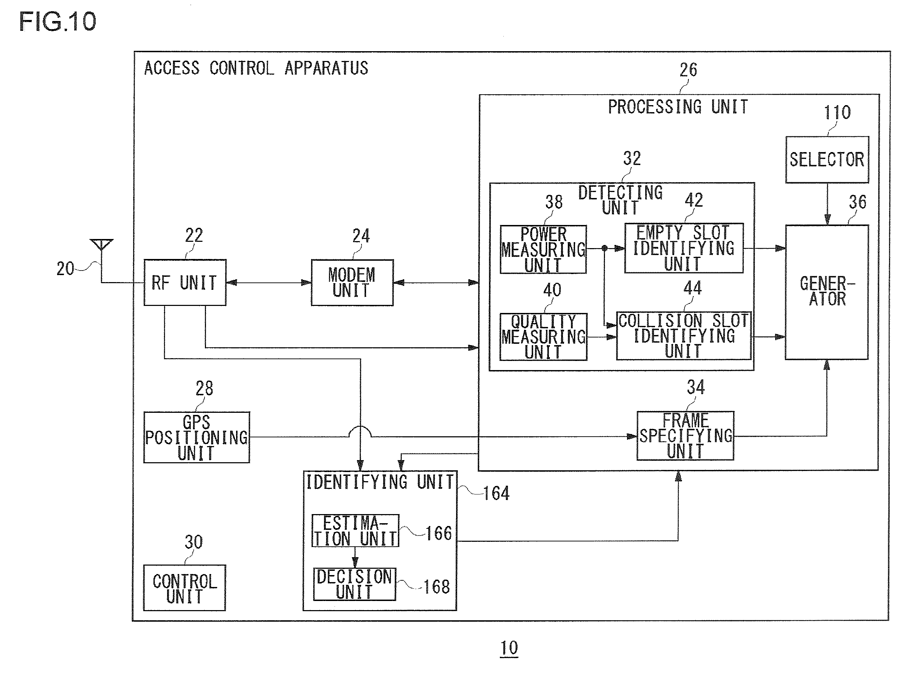

FIG. 10 shows a structure of the access control apparatus 10 according to a modification. The access control apparatus 10 includes an antenna 20, an RF unit 22, a modem unit 24, a processing unit 26, a GPS positioning unit 28, a control unit 30, and an identifying unit 164. The processing unit 26 includes a detecting unit 32, a frame specifying unit 34, a generator 36, and a selector 110. The detecting unit 32 includes a power measuring unit 38, a quality measuring unit 40, an empty slot identifying unit 42, and a collision slot identifying unit 44. The identifying unit 164 includes an estimation unit 166 and a decision unit 168. The antenna 20, the RF unit 22, the modem unit 24, the GPS positioning unit 28, the control unit 30, the frame specifying unit 34, and the identifying unit 164 correspond respectively to the antenna 150, the RF unit 152, the modem unit 154, the GPS positioning unit 158, the control unit 162, the frame generator 160, and the identifying unit 164 of Fig.2, and therefore the repeated description thereof is omitted here. In particular, a description of the detection and broadcasting of a malfunction terminal apparatus 14 are omitted here.

The selector 110 performs carrier sensing on each slot of the respective plurality of control slots in the control region 220, and selects one control slot out of them based on the carrier sensing result. Since the processing performed by the selector 110 is similar to that performed by the processing unit 156 of FIG. 2, the description thereof is omitted here. The selector 110 outputs information on the selected control slot to the generator 36.

The power measuring unit 38 receives a received signal from the RF unit 22 or the modem unit 24 and measures the received power. Note that the received power is measured slot by slot. Also, slots correspond to slots other than the control slots. Hence, the power measuring unit 38 measures the received power for each of the plurality of slots. The power measuring unit 38 outputs the received power for each slot to the empty slot identifying unit 42 and the collision slot identifying unit 44. The quality measuring unit 40 receives the demodulation result from the modem unit 24 and measures the signal quality for each of the plurality of slots. The signal quality measured herein is the error rate. Here, slots correspond to slots other than the control slots, too. It should be noted that known art can be used for the measurement of the error rate, so that the description thereof is omitted here. Also, instead of the error rate, EVM (Error Vector Magnitude) or the like may be measured as the signal quality. The quality measuring unit 40 outputs the error rate to the collision slot identifying unit 44.

The empty slot identifying unit 42 receives the received power for each slot from the power measuring unit 38. The empty slot identifying unit 42 compares each received power against a threshold value (hereinafter referred to as "threshold value for empty slot") and identifies the slot for which the received power is smaller than the threshold value for empty slot. That is, the empty slot identifying unit 42 detects, from among a plurality of slots other than those contained in the control region 220, a slot that can be used in communication among a plurality of terminal apparatuses, as an empty slot. Note here that when there are a plurality of empty slots, the empty slot identifying unit 42 identifies them as empty slots. The empty slot identifying unit 42 outputs information on the identified empty slots to the generator 36.

The collision slot identifying unit 44 receives the received power for each slot from the power measuring unit 38 and receives the error rate for each slot from the quality measuring unit 40. Also, the collision slot identifying unit 44 associates the received power with the error rate, slot by slot. The collision slot identifying unit 44 not only compares the received power against a first threshold value, but also compares the error rate against a second threshold value, slot by slot. The collision slot identifying unit 44 identifies, as a collision slot, a slot for which the received power is larger than the first threshold value and at the same time the error rate is higher than the second threshold value. That is, the collision slot identifying unit 44 recognizes, as a collision slot, a slot for which the received power is large but the communication quality is inferior. In this manner, the collision slot identifying unit 44 detects, as a collision slot, a slot in which a collision has occurred due to duplicate transmission of signals sent from a plurality of terminal apparatuses. The collision slot identifying unit 44 outputs information on the identified collision slots to the generator 36.

The generator 36 receives information on empty slots from the empty slot identifying unit 42 and also receives information on collision slots from the collision slot identifying unit 44. The generator 36 generates control information by adding the information on empty slots and the information on collision slots thereto. Note here that the numbers, 1, 2, ... from the start (hereinafter referred to as "slot numbers") are given respectively to a plurality of slots contained in a frame. The generator 36 adds the slot number(s) of the empty slot(s) contained in the previous frame(s) as information on empty slots to the control information. Further, as the generator 36 receives (1) the detection result that a malfunctioning terminal apparatus has been detected by the decision unit 168, (2) information on the detected location, and (3) information on slots used by the malfunctioning terminal apparatus, the generator 36 stores these pieces of information in the control information, too. Also, the generator 36 receives information on frames and slots from the frame specifying unit 34. The generator 36 periodically assigns the control information to any one of control slots. The generator 36 outputs the control information to the modem unit 24, using the thus assigned control slot.

In the exemplary embodiments, the slot decision unit 68 of the terminal apparatus 14 estimates empty slots based on the carrier sensing result. According to the modification, in contrast thereto, the slot decision unit 68 estimates empty slots based on the information on empty slots and/or the information on collision slots contained in the control information. A description is given herein of processing performed by the terminal apparatus 14 according to the modification.

The control information extraction unit 66 receives the control information fed from the modem unit 54. The control information extraction unit 66 acquires the information on empty slots and the information on collision slots from the control information. The control information extraction unit 66 outputs the information on empty slots and the information on collision slots to the slot decision unit 68. The slot decision unit 68 receives the information on empty slots and the information on collision slots from the control information extraction unit 66. The slot decision unit 68 selects empty slot(s) from among the slots excluding those of the control region 220 in each frame.

While such processing continues, the control information extraction unit 66 continues to extract the information on empty slots and the information on collision slots, from the control information, frame by frame. Based on the information on collision slots, the slot decision unit 68 checks to see if any of the slot numbers corresponding to the slots in current use is mistaken as a collision slot. If no slot is mistaken as a collision slot, the slot decision unit 68 will continue to output the same slot numbers as before to the generator 64. If, on the other hand, any slot is mistaken as a collision slot, the slot decision unit 68 will again estimate empty slots based on the information on empty slots. In other words, the slot decision unit 68 repeats the previous processing.

If the control information received by the control information extraction unit 66 does not contain the information on empty slots, the slot decision unit 68 may execute the operation described in the exemplary embodiments. This corresponds to a case where broadcast is not the control information from the access control apparatus 10 of FIG. 10 but the control information from the access control apparatus 10 of FIG. 2. In this case, the slot decision unit 68 performs carrier sensing on each of a plurality of slots contained in the frame generated by the control information extraction unit 66. If the control information extraction unit 66 does not receive the information on empty slots, the slot decision unit 68 will estimate empty slots based on the carrier sensing execution result.

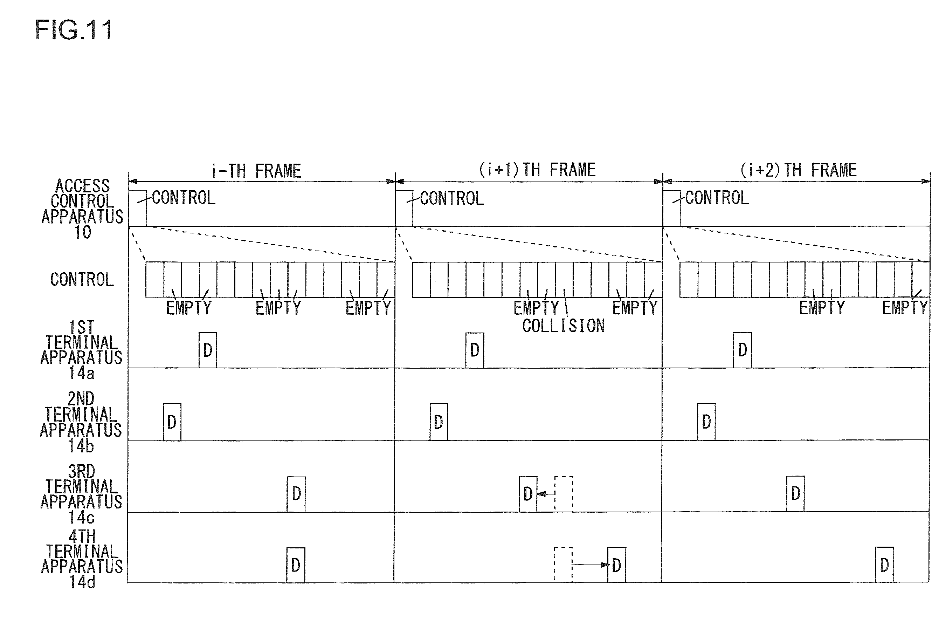

FIG. 11 shows an operational overview of the communication system 100 according to the modification. The horizontal direction of FIG. 11 corresponds to time, and three frames that are an ith frame to an (i+2)th frame are indicated as described in the top row. Assume herein for the clarity of description that the number of control slots contained in each frame is one and each frame contains 15 slots. As shown in FIG. 11, the access control apparatus 10 broadcasts the control information using the leading slot of each frame. "Control" in FIG. 11 indicates control information. Below "control", information on empty slots and information on collision slots both contained in the control information are indicated by associating them with slots. "Empty" in FIG. 11 indicates an empty slot, whereas "collision" in FIG. 11 indicates a collision slot.

In the rows below the top row, the timings with which the first terminal apparatus 14a to the fourth terminal apparatus 14d broadcast the data are indicated. "D" in FIG. 11 means data. The first terminal apparatus 14a to the fourth terminal apparatus 14d each references the control information and selects an empty slot. The first terminal apparatus 14a to fourth terminal apparatus 14d each broadcasts the data using the selected empty slot in the ith frame. Since the empty slot selected by the third terminal apparatus 14c is identical to the empty slot selected by the fourth terminal apparatus 14d, the data broadcast from them collide with each other. The access control apparatus 10 detects the occurrence of collision in said slot. The control information, broadcast from the access control apparatus 10, in the (i+1)th frame indicates the slot where the collision occurs, as the information on the collision slot.

Since no collision occurs in the slots used by the first terminal apparatus 14a and the second terminal apparatus 14b, the slots having the same slot numbers are used again. On the other hand, since collision has occurred in the slots used by the third terminal apparatus 14c and the fourth terminal apparatus 14d, different empty slots are selected again. The third terminal apparatus 14c and the fourth terminal apparatus 14d broadcast the data, using the selected empty slots. Since not all of data collides, the collision slots are not indicated in the control information, broadcast from the access control apparatus 10, in the (i+2)th frame. Thus, the first terminal apparatus 14a to the fourth terminal apparatus 14d use again the slots, having the same slot numbers as the slots used already, in the (i+2)th frame.

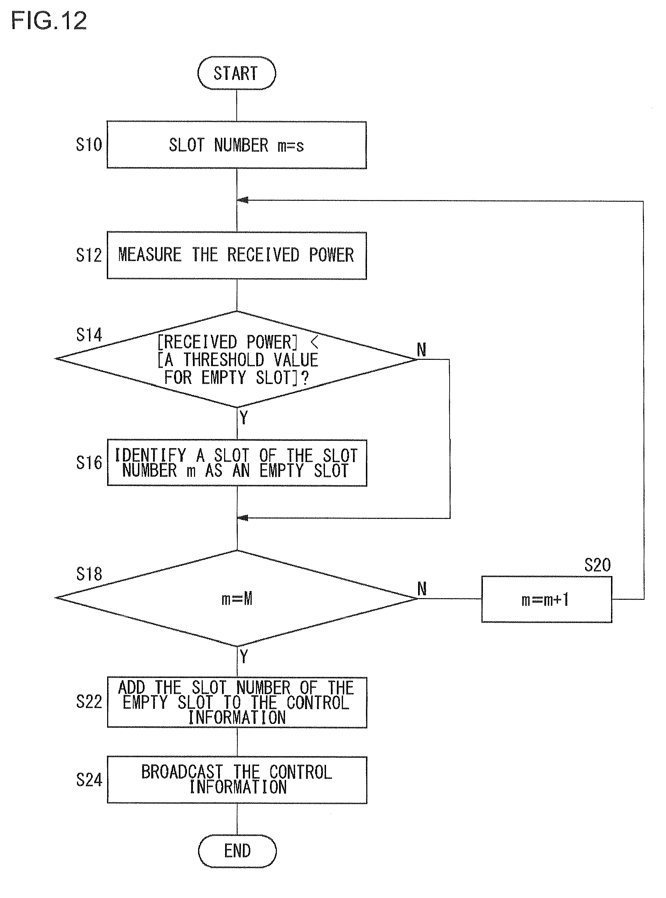

FIG. 12 is a flowchart showing a procedure in which the access control apparatus 10 conveys an empty slot. The detecting unit 32 sets the slot number m to "s" (S10). The power measuring unit 38 measures the received power (S12). If the received power is less than the threshold value for empty slot (Y of S14), the empty slot identifying unit 42 will identify the slot of the slot number m as an empty slot (S16). If the received power is not less than the threshold value for empty slot (N of S14), the empty slot identifying unit 42 will skip the process of Step S16. If the slot number m is not equal to the maximum number M (N of S18), the detecting unit 32 will increment the slot number m by 1 (S20) and the process will return to Step S12. If, on the other hand, the slot number m is the maximum number M (Y of S18), the generator 36 will add the slot number of the empty slot to the control information (S22). The modem unit 24 and the RF unit 22 broadcast the control information (S24).

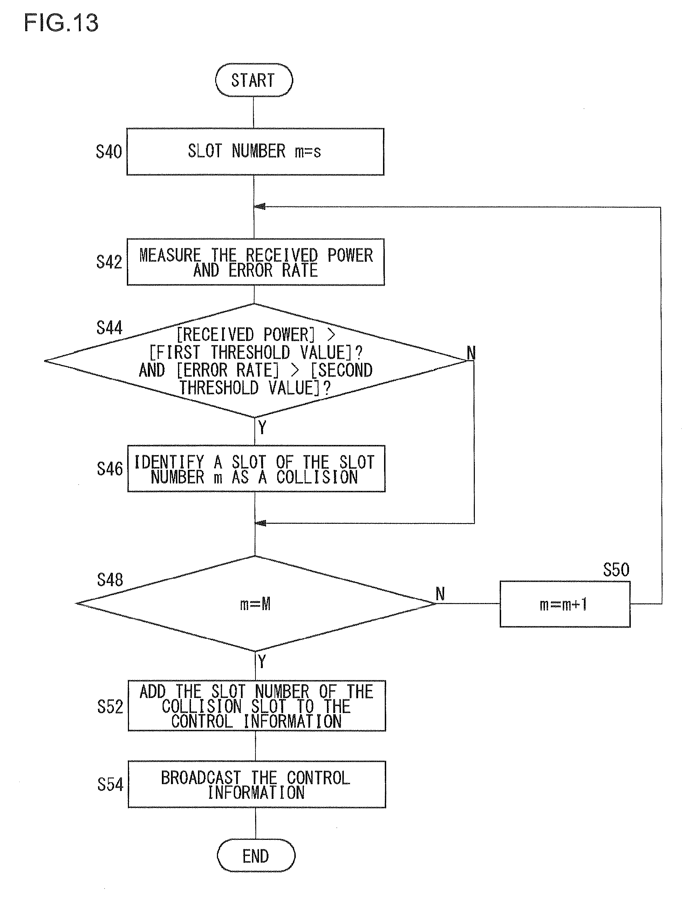

FIG. 13 is a flowchart showing a procedure in which the access control apparatus 10 conveys a collision slot. The detecting unit 32 sets the slot number m to "s" (S40). The power measuring unit 38 measures the received power, and the quality measuring unit 40 measures the error rate (S42). If the received power is greater than the first threshold value and the error rate is greater than the second threshold value (Y of S44), the collision slot identifying unit 44 will identify the slot of the slot number m as a collision slot (S46). If the received power is not greater than the first threshold value or the error rate is not greater than the second threshold value (N of S44), the collision slot identifying unit 44 will skip the process of Step S46. If the slot number m is not equal to the maximum number M (N of S48), the detecting unit 32 will increment the slot number m by 1 (S50) and the process will return to Step S42. If, on the other hand, the slot number m is the maximum number M (Y of S48), the generator 36 will add the slot number of the collision slot to the control information (S52). The modem unit 24 and the RF unit 22 broadcast the control information (S54).

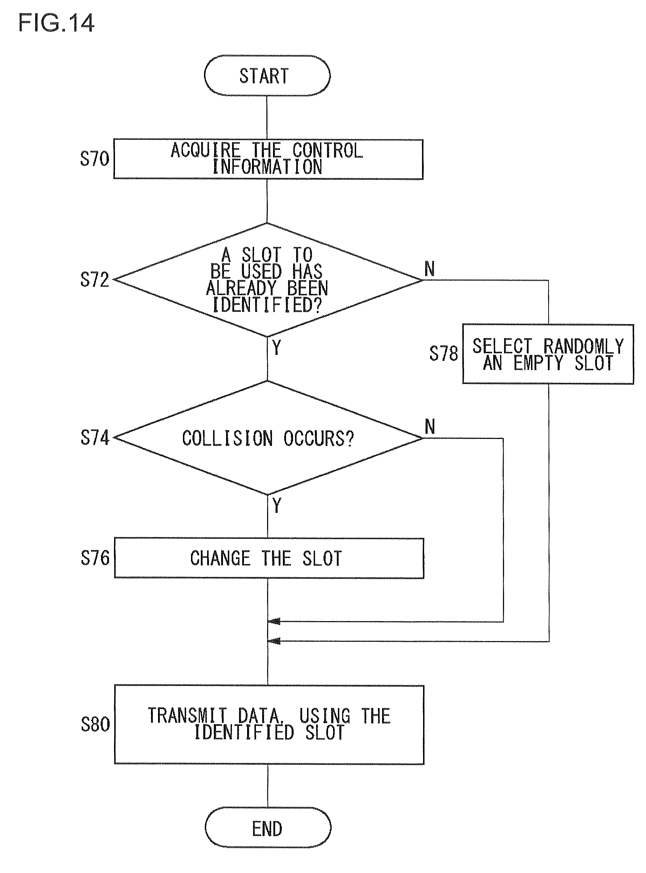

FIG. 14 is a flowchart showing a data transmission procedure performed by the terminal apparatus 14 according to the modification. The control information extraction unit 66 acquires the control information (S70). If a slot to be used has already been identified (Y of S72), the slot decision unit 68 will verify whether collision occurs in this slot or not. If collision occurs (Y of S74), the slot decision unit 68 will change the slot (S76). If no collision occurs (N of S74), Step S76 will be skipped. If, on the other hand, a slot to be used has not already been identified (N of S72), the slot decision unit 68 will estimate empty slots and then randomly identify an empty slot (S78). The generator 64 transmits the data, using the thus identified slot (S80).

Another modification will now be described. When a wireless LAN is applied to the inter-vehicular communication, a need arises to transmit information to a large indefinite number of terminal apparatuses, and therefore it is desirable that signals be sent by broadcast. Yet, at an intersection or like places, an increase in the number of vehicles, that is, the number of terminal apparatuses, is considered to cause an increase in the collisions of the packet signals therefrom. In consequence, data contained in the packet signals may not be transmitted to the other terminal apparatuses. If such a condition occurs in the inter-vehicular communication, then the objective of preventing collision accidents of vehicles on a sudden encounter at an intersection will not be attained. Even though some measures are taken to solve the problems in the inter-vehicular communication, the aforementioned objective may not be attained if an intentionally altered terminal apparatus transmits signals. Thus, an object of the another modification is to provide the technology capable of reducing the effect of the signals sent from the intentionally altered terminal apparatus.

The another modification of an embodiment relates to a communication system carrying out data communication between terminal apparatuses installed in vehicles. A terminal apparatus transmits, by broadcast, packet signals containing information such as the traveling speed and position of a vehicle (hereinafter referred to as "data"). And the other terminal apparatuses receive the packet signals and recognize the approach or the like of the vehicle based on the data. Note here that the terminal apparatuses employ the OFDM modulation scheme to achieve faster communication speed. Under these circumstances, an increase in the number of terminal apparatuses at an intersection or like place increases the probability of packet signals occurring. To cope with it, the communication system according to the another modification executes the following processes.

The communication system according to the another modification includes an access control apparatus in addition to a plurality of terminal apparatuses, and the access control apparatus is installed at an intersection, for instance. The access control apparatus repeatedly specifies a frame containing a plurality of slots. Note that one or more of the plurality of slots contained in each frame are reserved and secured as control slots. Also, the access control apparatus identifies control slots to be used, and adds information on timings of the control slots and information with which to identify said access apparatus (hereinafter referred to as "identification information) to the control information. Also, the access control apparatus transmits, by broadcast, a packet signal containing the control information (hereinafter referred to sometimes as "control information" also) using the control slots. Here, the information on timings of the control slots is, for instance, information on which slot number, starting from the beginning of a frame, the control slot is assigned to (this information will be referred to as "control slot information").

A terminal apparatus receives the control information and thereby generates a frame corresponding to the control information. The thus generated frame contains a plurality of slots as well. Also, the terminal apparatus recognizes slots, in the plurality of slots contained in the frame, which are other than the control slots. Note that in the description of terminal apparatuses given hereunder the slots sometimes mean those excluding the control slots. Each terminal apparatus performs carrier sensing on a plurality of slots, respectively, and thereby it estimates a slot which is not used by other terminal terminals (hereinafter referred to as "empty slot" or "unused slot"). There may be a plurality of such empty slots. The terminal apparatus selects at random one slot to be used for the transmission of data from among empty slots. The terminal apparatus transmits, by broadcast, a packet signal containing data (hereinafter referred to sometimes as "data" also) using the selected slot. The terminal apparatus uses a relatively identical slot for a plurality of frames.

Note here that the access control apparatus has no direct involvement in data communication between terminal apparatuses, that is, the access control apparatus does not directly specify the slot to be used in the data communication. In other words, the access control apparatus only conveys the construction of a frame containing slots to be used by a plurality of terminal apparatus. The terminal apparatus performs data communication with timings of slots contained in the frame notified by the access control apparatus. That is, the access control apparatus controls the communications between a plurality of terminal apparatuses.

It is to be noted that since the control information is also transmitted in a single slot, there are chances that the data transmitted from a terminal apparatus incapable of receiving the control information may collide with the control information. In consequence, if the other terminal apparatuses cannot receive the control information, then there arises a difficulty of carrying out the aforementioned processes. To cope with this situation, the OFDM signals used in transmitting data have some of the subcarriers as null carriers in which no data is contained (these subcarriers being hereinafter referred to as "identification carriers"). On the other hand, the OFDM signals used in transmitting control information have signals placed in the identification carriers, too. Hence, even when there is a collision between data and control information, the terminal apparatus can detect the presence of control information by observing the signal components of the identification carrier.

Further, if a plurality of access apparatuses are installed at an intersection where they are located close to each other, interference between them must be taken into consideration. If, for instance, the control information transmitted by broadcast from the plurality of access control apparatuses interfere with each other, the terminal apparatuses may not be able to receive the control information and therefore the aforementioned operations will not be achieved. Though such interference can be avoided by assigning a different frequency channel to each access control apparatus, another separate structure to reduce the interference will be needed if no other frequency channel can be provided. To cope with this, a plurality of control slots are reserved and secured as described above. Each access control apparatus performs carrier sensing on a plurality of control slots, respectively, and thereby it selects one control slot and transmits, by broadcast, the control information using the selected control slot.

Even in such a case as defined above, it is possible that an intentionally altered terminal apparatus is used. For example, alteration may be made by broadcasting the data whose contents have been altered or by pretending to be another terminal apparatus to broadcast data. If falsified information indicating a location of the terminal apparatus different from the true position thereof is contained in the data, then the objective of preventing collision accidents of vehicles will not be attained. To cope with this, the terminal apparatuses and the access control apparatus detect the presence of a terminal apparatus which may have been altered (such an altered terminal apparatus will be hereinafter referred to as "inappropriate terminal apparatus"), based on the received signals. If an inappropriate terminal apparatus is detected, the terminal apparatuses and the access control apparatus will broadcast it by adding the detection result that the inappropriate terminal apparatus has been detected, the detected location, and so forth to the control information and data. Terminal apparatuses that have received this information recognize the presence of the inappropriate terminal apparatus and then ignore signals that seem to have been sent from such an altered terminal apparatus.

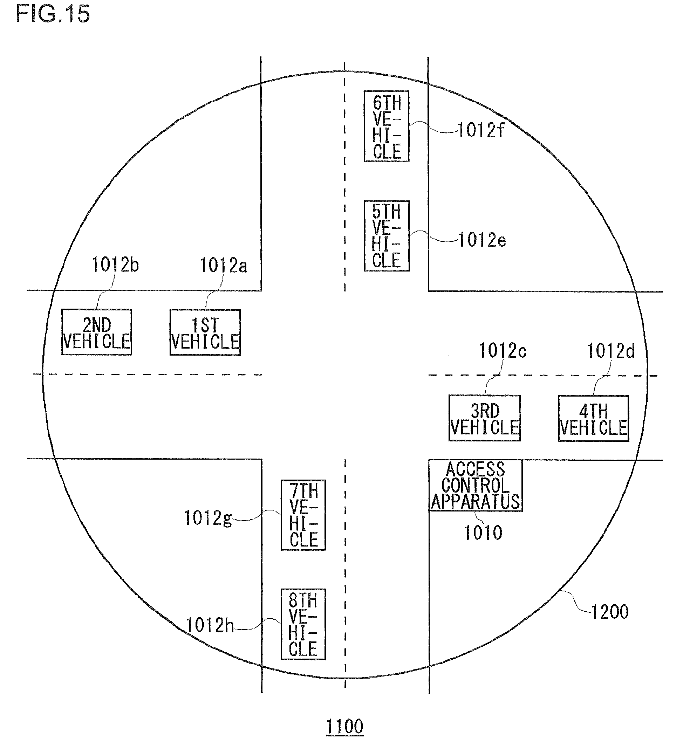

FIG. 15 shows a structure of a communication system 1100 according to the another modification. FIG. 15 corresponds to a case thereof at an intersection viewed from above. The communication system 1100 includes an access control apparatus 1010 and a first vehicle 1012a, a second vehicle 1012b, a third vehicle 1012c, a fourth vehicle 1012d, a fifth vehicle 1012e, a sixth vehicle 1012f, a seventh vehicle 1012g, and an eighth vehicle 1012h, which are generically referred to as "vehicle 1012" or "vehicles 1012". It is to be noted that each vehicle 1012 has a not-shown terminal apparatus installed therein. Also, an area 1200 is formed by the access control apparatus 1010.

As shown in FIG. 15, a road extending in the horizontal, or left-right, direction and a road extending in the vertical, or up-down, direction in FIG. 15 intersect with each other in the central portion thereof. Note here that the upper side of FIG. 15 corresponds to the north, the left side thereof the west, the down side thereof the south, and the right side thereof the east. And the portion where the two roads intersect each other is the intersection. The first vehicle 1012a and the second vehicle 1012b are advancing from left to right, while the third vehicle 1012c and the fourth vehicle 1012d are advancing from right to left. Also, the fifth vehicle 1012e and the sixth vehicle 1012f are advancing downward, while the seventh vehicle 1012g and the eighth vehicle 1012h are advancing upward.

The terminal apparatus installed in each of the vehicles 1012 acquires data and transmits, by broadcast, a packet signal containing the data. Here, before explaining another modification, a description will be given of an operation of a terminal apparatus which is compatible with a known wireless LAN, i.e., CSMA/CA. Each terminal apparatus transmits data by broadcast when it has determined by executing carrier sense that transmission is possible. Consequently, there are chances of data from a plurality of terminal apparatuses colliding with each other. Also, as the number of terminal apparatuses increases, there will be greater probability of collisions occurring. In particular, at locations like intersections, the likelihood of data collision is greater despite the fact that the likelihood of vehicles 1012 colliding with each other is also great. This means failed utilization of data in spots where data is in the greatest demand.

Therefore, the communication system 1100 places an access control apparatus 1010 at each intersection. The access control apparatus 1010 repeatedly generates a frame containing a plurality of slots, based on the signals received from not-shown GPS satellites. Here, one or more of the plurality of slots correspond to the control slots. The access control apparatus 1010 adds the control slot information and the identification information to the control information. Further, the access control apparatus 1010 broadcasts the control information, using control slots. The selection of the control slot(s) will be discussed later.

A plurality of terminal apparatuses receive the control information broadcast by the access control apparatus 1010 and generate frames based on the control information. As a result, the frame generated by each of the plurality of terminal apparatuses is synchronized with the frame generated by the access control apparatus 1010. Also, slots generated by the respective plurality of terminal apparatuses are synchronized with each other. Each terminal apparatus performs carrier sensing in a plurality of slots, respectively, and estimates empty slots. Also, the terminal apparatus randomly selects one slot out of the empty slots. Also, the terminal apparatus broadcasts data using the selected slot. The terminal apparatus continues to select the same slots in corresponding timing in each frame, for a plurality of frames. It is to be appreciated that the terminal apparatus may broadcast data even when the terminal apparatus is not receiving control information. The terminal apparatus which has received data from the other terminal apparatuses recognizes, based on the data, the presence of vehicles 1012 that are carrying the other terminal apparatuses.

Note here that both the control information broadcast from the access control apparatus 1010 and the data broadcast from the terminal apparatuses use OFDM signals. However, it is not the same subcarriers in which the control information and the data are placed. The data is not placed in the aforementioned identification carriers. On the other hand, identification information is placed not only in the subcarriers where the data is placed but also in the identification carriers. As a result, even when there is a collision between data and identification information, the terminal apparatus can detect the presence of control information by observing the signal components of identification carriers. It should be noted that the aforementioned detection of entry into the area 1200 by the terminal apparatus may be made relative to the identification carriers.

Assume in FIG. 15 that a terminal apparatus installed in the seventh vehicle 1012g is the aforementioned inappropriate terminal. Thus, the positional information contained in the data broadcast from this terminal apparatus may correspond to one outside the area 1200 or the identification number contained in the data broadcast from this terminal apparatus may be identical to that of another terminal apparatus. Also, the transmission cycle of data transmitted from this terminal apparatus may differ from the frame's cycle. It is desirable that other terminal apparatuses should not trust such data. Thus, the other terminal apparatus and the access control apparatus 1010 demodulate the received signal and determine if this signal is sent from the inappropriate terminal apparatus, based on this signal. If this signal is turned out to be sent from the inappropriate terminal apparatus, the other terminal apparatuses and the access control apparatus 1010 that have detected the signal sent from the inappropriate terminal apparatus will broadcast the resulting result by adding the fact about it, the detected location to the data and control information. The other terminal apparatuses and the access control apparatus 1010 that have received this information recognize the presence of the inappropriate terminal apparatus. A method for determining whether the signal is sent from the inappropriate terminal apparatus or not will be discussed later.

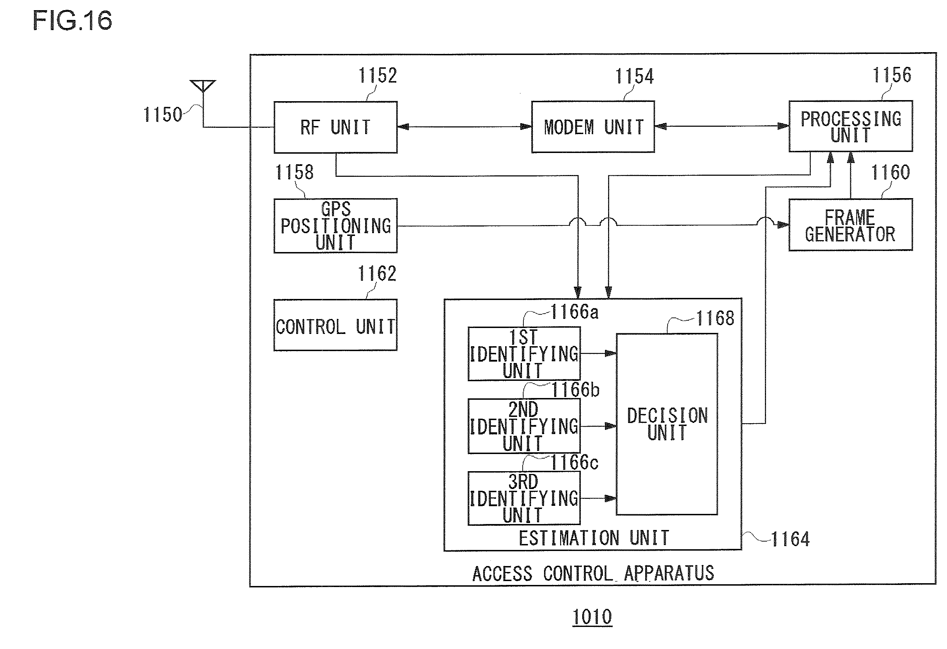

FIG. 16 shows a structure of the access control apparatus 1010. The access control apparatus 1010 includes an antenna 1150, an RF unit 1152, a modem unit 1154, a processing unit 1156, a GPS positioning unit 1158, a frame generator 1160, a control unit 1162, and an estimation unit 1164. The estimation unit 1164 includes a first identifying unit 1166a, a second identifying unit 1166b, and a third identifying unit 1166c, which are generically referred to as "identifying unit 1166" or "identifying units 1166", and a decision unit 1168. The GPS positioning unit 1158 receives signals from not-shown GPS satellites and acquires information on the time of day based on the received signals. It should be noted that known art can be used for the acquisition of information on the time of day and therefore the description thereof is omitted here. The GPS positioning unit 1158 outputs the information on the time of day to the frame generator 1160.

The frame generator 1160 acquires information on the time of day from the GPS positioning unit 1158. The frame generator 1160 generates a plurality of frames based on the information on the time of day. For example, the frame generator 1160 generates ten "100 msec" frames by dividing a duration of "1 sec" into 10 parts from the timing of "0 msec". Frames are thus defined and specified repeatedly through the repetition of this process. Also, the frame generator 1160 generates a plurality of slots by dividing each frame into a plurality of parts. For example, dividing a frame into 200 parts generates 200 slots with each slot being "500 µsec" long.

Here, one or more of a plurality of slots contained in each frame is/are reserved as "control slots". For example, first five slots from the beginning of 200 slots contained in each frame are control slots. Also, the control slot is a slot used when the access control apparatus 10 broadcasts control information. The remaining slots of the plurality of slots in each frame are reserved and secured for the communications between not-shown terminal apparatuses. As previously indicated, since the communication system 1100 employs the OFDM modulation scheme, each slot is so specified as to be composed of a plurality of OFDM symbols. Also, an OFDM symbol comprises a guard interval (GI) and a valid symbol. Note that a guard time may be provided in the front portion and the rear portion of each slot. It is to be noted also that a certain group of or combination of a plurality of OFDM symbols contained in a slot is equivalent to the packet signal mentioned earlier.

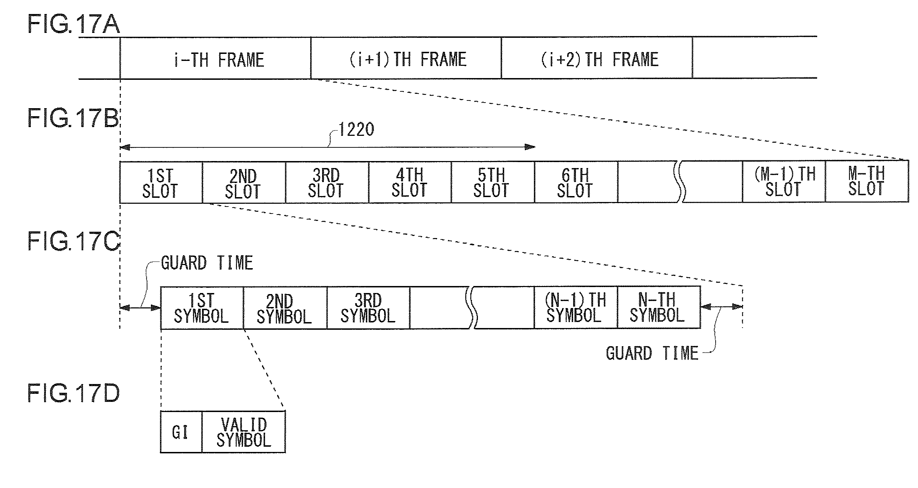

FIGS. 17A to 17D show the formats of frames generated by the frame generator 1160. FIG. 17A shows a structure of frames. As shown in FIG. 17A, a plurality of frames, such as i-th frame to (i+2)th frame, are so specified as to be repeated. Also, the duration of each frame is "100 msec", for instance. FIG. 17B shows a structure of a single frame. As shown in FIG. 17B, a single frame consists of M units of slots. For example, M is "200" and the duration of each slot is "500 µsec". Also, slots assigned to the beginning part of each frame correspond to the control slots, and an interval where the control slots are assigned is indicated as a control region 1220.

In this case, five slots which are a first slot to a fifth slot are contained in the control region 1220 as the control slots. FIG. 17C shows a structure of a single slot. As shown in FIG. 17C, a guard time may be provided in the front portion and the rear portion of each slot. And the remaining duration of the slot consists of N units of OFDM symbols. FIG. 17D shows a structure of each OFDM symbol. As shown in FIG. 17D, each OFDM symbol consists of a GI and a valid symbol. Let us now refer back to FIG. 16.

The RF unit 1152 receives through the antenna 1150 a packet signal transmitted in communication between the other terminal apparatuses (not shown) in each slot, as a receiving processing. Here, if it is specified in a manner such that the frame containing a plurality of slots as in FIG. 17A is repeated, the data is broadcast in cycles of frames, using a slot selected from among the plurality of slots. Also, data contains the identification number of a terminal apparatus which is a broadcast source. The RF unit 1152 performs a frequency conversion on the packet signal of a radiofrequency received through the antenna 1150 and thereby generates a packet signal of baseband. Further, the RF unit 1152 outputs the baseband packet signal to the modem unit 1154. Generally, a baseband packet signal is formed of an in-phase component and a quadrature component, and therefore it should be represented by two signal lines. However, it is represented by a single signal line here to make the illustration clearer for understanding.

Also, the RF unit 1152 includes an LNA (Low Noise Amplifier), a mixer, an AGC unit, and an A-D conversion unit. As a transmission processing, the RF unit 1152 performs a frequency conversion on the baseband packet signal inputted from the modem unit 1154 and thereby generates a radiofrequency packet signal in each slot. Further, the RF unit 1152 transmits, through the antenna 1150, the radio frequency packet signal. The RF unit 1152 also includes a PA (Power Amplifier), a mixer, and a D-A conversion unit.

The modem unit 1154 demodulates the baseband packet signal fed from the RF unit 1152, as a receiving processing. Further, the modem unit 1154 outputs the demodulation result to the processing unit 1156. Also, the modem unit 1154 modulates the data fed from the processing unit 1156, as a transmission processing. Further, the modem unit 1154 outputs the modulation result to the RF unit 1152 as a baseband packet signal. It is to be noted here that the communication system 1100 is compatible with the OFDM modulation scheme and therefore the modem unit 1154 performs FFT (Fast Fourier Transform) as a receiving processing and performs IFFT (Inverse Fast Fourier Transform) as a transmission processing also.

The processing unit 1156 receives information on the timing of a frame and the timings of slots contained in the frame, from the frame generator 1160. The processing unit 1156 identifies the timings of control slots contained in a plurality of slots contained in the frame. In the case of FIG. 17A, the five control slots contained in the control region 1220 are identified. The processing unit 1156 performs carrier sensing on each slot via the antenna 1150, the RF unit 1152 and the modem unit 1154. Known art can be used as the carrier sensing and therefore the description thereof is omitted here. It is appreciated that the processing unit 1156 may receive the received signals from the RF unit 1152 without the signals being passed through the modem unit 1154. The processing unit 1156 selects one control slot out of the five control slots based on the carrier sensing result. For example, the control slot having the minimum interference power is selected.

The processing unit 1156 generates information on the selected control slot. Also, the processing unit 1156 generates control information by adding the control slot information and the identification information thereto. The processing unit 1156 assigns the control information to the selected control slot. The processing unit 1156 outputs the control information to the modem unit 1154, using the assigned control slot. Transmitting the control information using the control slot assigned by the communication system 1100 is equivalent to notifying the timing of control slots in a frame. Since the relative position of control slots in a frame is contained in the control slot information, said transmitting the control information using the control slot assigned by the communication system 1100 is also equivalent to notifying the timing of the frame. Here, the timing of frame corresponds to the timing to be synchronized when each terminal apparatus transmits data in the communications between the terminal apparatuses.

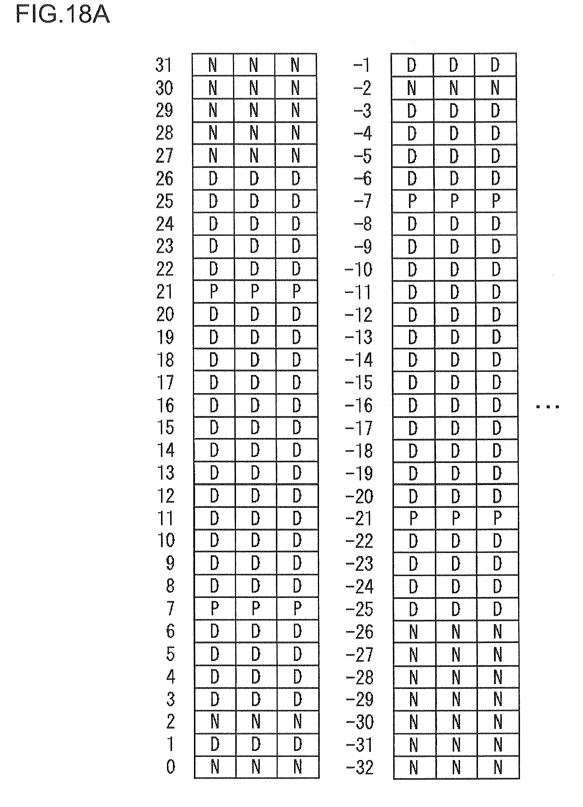

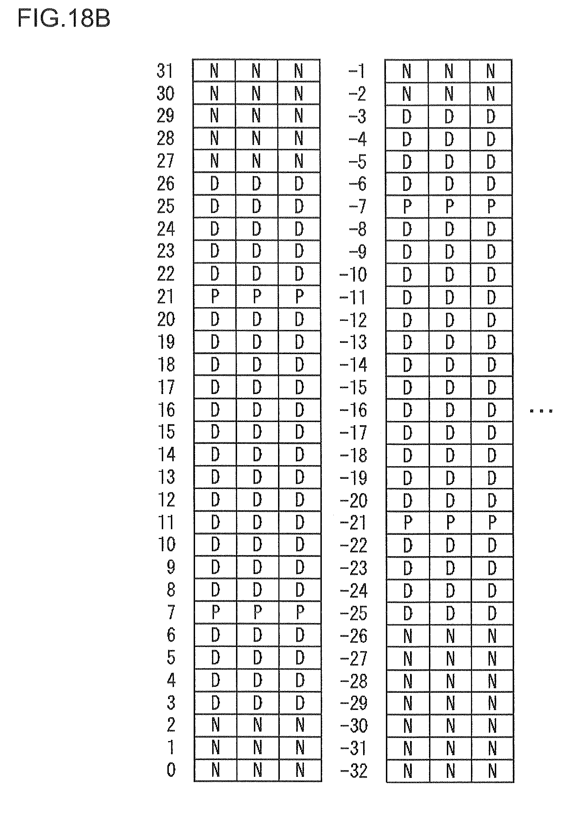

As described above, the communication system 1100 is compatible with the OFDM modulation scheme and therefore the processing unit 1156 generates the control information as an OFDM signal. Note here that the OFDM signals are also used for the communications between a not-shown plurality of terminal apparatuses. A description is given herein by comparing an OFDM signal that has the control information assigned (hereinafter this is sometimes called "control information" also) with an OFDM signal that has data assigned (hereinafter this is sometimes called "data" also). FIGS. 18A and 18B illustrate formats of OFDM symbols used in the communication system 1100. FIG. 18A corresponds to control information, whereas FIG. 18B corresponds to data.

In both FIG. 18A and FIG. 18B, the vertical direction represents the frequency, whereas the horizontal direction represents time. The numbers "31", "30", ..., "-32" are indicated from top along the vertical direction, and these are the numbers assigned to identify subcarriers (hereinafter referred to as "subcarrier numbers"). In OFDM signals, the frequency of a subcarrier whose subcarrier number is "31" is the highest, whereas the frequency of a subcarrier whose subcarrier number is "-32" is the lowest. In FIG. 18A and FIG. 18B, "D" corresponds to a data symbol, "P" a pilot symbol, and "N" a null.

What are common to the control information and the data are the subcarrier numbers "31" to "27", "2", "0", and "-2", and the subcarrier numbers "-26" to "-32" which are all null. In the control information, the subcarrier numbers "26" to "3", "-3" to "-25" are also used in data, and the use of symbols is the same for both the control information and the data. In the control information, on the other hand, the subcarrier numbers "1" and "-1" are not used for data. These correspond to the aforementioned identification carriers. That is, the identification carrier is assigned to a subcarrier near the center frequency of an OFDM signal. In the control information, a guard band is provided between a subcarrier used also for data and the identification carrier, namely between the subcarrier number "2" and the subcarrier number "-2". The subcarriers of the subcarrier number "-2" through the subcarrier number "2" may be collectively called "identification carrier" or "identification carriers".

Here, the processing unit 1156 assigns the information on frames and the slot numbers to the identification carrier. Also, the processing unit 1156 may preferentially assign information having higher degrees of importance to the identification carrier. Also, a known signal is assigned to an OFDM symbol which is located anterior to the packet signal. Such a known signal is used for AGC or used to estimate the channel characteristics. The processing unit 1156 may assign a known signal to the identification carrier over a partial period of a predetermined slot. Such a known signal is used as a unique word (UW), for example. Let us now refer back to FIG. 16.

The modem unit 1154 and the RF unit 1152 transmit, by broadcast, the control information generated by the processing unit 1156 from the antenna 1150, using the control slots. One of the destinations of the control information is a terminal apparatus. The terminal apparatus having received the control information recognizes the timing of each slot and uses at least one of the remaining slots reserved for the communications between terminal apparatuses. If the terminal apparatus broadcasts the data over a plurality of frames, the terminal apparatus will use the same slots in corresponding timing in each frame.

The signals demodulated by the modem unit 1154 are supplied to the identifying units 1166 via the processing unit 1156, and then the identifying units 1166 detect that a terminal apparatus, which is the broadcast source of the signals, is an inappropriate apparatus. Though the identifying units 1166 detect the inappropriate terminal apparatus using different methods in the first identifying unit 1166a to the third identifying unit 1166c, they may include one of the first identifying unit 1166a to the third identifying unit 1166c or any two of them. The first identifying unit 1166a receives the data demodulated by the modem unit 1154, via the processing unit 1156. Also, the first identifying unit 1166a determines if the received data complies with the definition, prescription, protocol or specification. More specifically, if the size of the data received is larger than the size of slot, the first identifying unit 1166a will determine that the data received does not comply with the prescription.

If a plurality of slots are used contiguously and the size of the data received is not of an integral multiple of the size of slot, the first identifying unit 1166a will determine that the size of the data received does not comply with the prescription. The first identifying unit 1166a acquires the identification number of the terminal apparatus, which is the broadcast source of the signals, from the received data. If a time duration which is an interval between when the initial signal arrives and when the next identical identification number is acquired does not match the frame's cycle, the first identifying unit 1166a will determine that the data received does not comply with the prescription. When the data received does not comply with the prescription, the first identifying unit 1166a finally detects that the terminal apparatus, which is the broadcast source of the signals, is an inappropriate apparatus.

The second identifying unit 1166b receives data demodulated by the modem unit 1154, via the processing unit 1156. Also, the second identifying unit 1166b acquires the identification number of a terminal apparatus, which is the broadcast source of the signals, from the demodulated data. As described above, each terminal apparatus broadcasts data, using a single slot contained in a frame. In other words, the same identification number should appear only once in each frame. If the same identification number appears plural times in a frame, the second identifying unit 1166b will determine that a spoofing terminal apparatus is present among terminal apparatus corresponding to this identification number. That is, the second identifying unit 11166b estimates, on the identification number and the protocol, that the terminal apparatus, which is the broadcast source of the signals received, is a spoofing terminal apparatus that pretends to be a different terminal apparatus. Further, when the second identifying unit 1166b estimates that it is a spoofing terminal apparatus, the second identifying unit 1166b detects that the terminal apparatus is an inappropriate apparatus.

The third identifying unit 1166c receives the data received by the RF unit 1152, and also receives data demodulated by the modem unit 1154, via the processing unit 1156. The data received by the RF unit 1152 may be radiofrequency data or baseband data. The third identifying unit 1166c compares these pieces of data. When a receiving state of signals received by the RF unit 1152 and a content of data decoded by the modem unit 1154 contradict with each other, the third identifying unit 1166c detects that the terminal apparatus is an inappropriate apparatus. More precisely, if the received power is getting larger but the positional information does not indicate that the apparatus is approaching, the third identifying unit 1166c will determine the contradiction. That the positional information does not indicate that the apparatus is approaching means, for instance, that the positional information indicates that the apparatus is moving away and/or that the positional information does change. The same determination will be made when the received power is getting smaller. An average value of the received powers within a frequency domain of the OFDM symbols is preferably used as the received power.

If an inappropriate apparatus is detected by at least one of the first identifying unit 1166a to the third identifying unit 1166c, the decision unit 1168 will determine that the applicable terminal apparatus is an inappropriate apparatus. The processing unit 1156 adds the detection result that the inappropriate apparatus has been detected by the decision unit 1168 and information on a detected location, to the control information. The detected location corresponds to the installation position of the access control apparatus 1010. As described above, such control information as this is transmitted, by broadcast, from the modem unit 1154, the RF unit 1152 and the antenna 1150. The control unit 1162 controls the processing of the access control apparatus 1010 as a whole.

These structural components may be implemented hardwarewise by elements such as a CPU, memory and other LSIs of an arbitrary computer, and softwarewise by memory-loaded programs or the like. Depicted herein are functional blocks implemented by cooperation of hardware and software. Therefore, it will be obvious to those skilled in the art that the functional blocks may be implemented by a variety of manners including hardware only, software only or a combination of both.

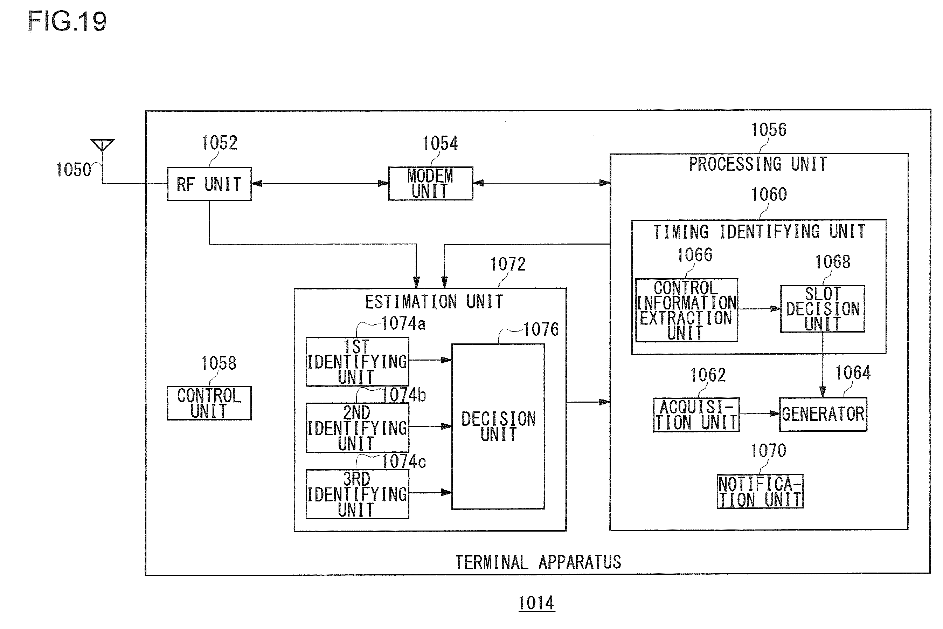

FIG. 19 shows a structure of a terminal apparatus 1014 mounted on a vehicle 1012. The terminal apparatus 1014 includes an antenna 1050, an RF unit 1052, a modem unit 1054, a processing unit 1056, a control unit 1058, and an estimation unit 1072. The processing unit 1056 includes a timing identifying unit 1060, an acquisition unit 1062, a generator 1064, and a notification unit 1070. The timing identifying unit 1060 includes a control information extraction unit 1066 and a slot decision unit 1068. The estimation unit 1072 includes a first identifying unit 1074a, a second identifying unit 1074b, and a third identifying unit 1074c, which are generically referred to as "identifying unit 1074" or "identifying units 1074", and a decision unit 1076. The antenna 1050, the RF unit 1052 and the modem unit 1054 carry out the processings similar to those carried out by the antenna 1150, the RF unit 1152 and the modem unit 1154 of FIG. 16, respectively. Thus, the repeated description thereof is omitted here.

The acquisition unit 1062 includes a GPS receiver, a gyroscope, a vehicle speed sensor, and so forth all of which are not shown in FIG. 19. The acquisition unit 1062 acquires the present position, traveling direction, traveling speed and so forth of a not-shown vehicle 1012, namely the vehicle 1012 carrying the terminal apparatus 1014, based on data supplied from the aforementioned not-shown components of the acquisition unit 1062. The present position thereof is indicated by the latitude and longitude. Known art may be employed to acquire them and therefore the description thereof is omitted here. The acquisition unit 1062 outputs the thus acquired information to the generator 1064.

The control information extraction unit 1066 receives the demodulation result fed from the modem unit 1054. of the demodulation result, the control information extraction unit 1066 monitors a part of subcarriers corresponding to the identification carrier. If valid data is contained in the part of subcarriers corresponding to the identification carrier, the control information extraction unit 1066 will recognize that the control information extraction unit 66 is receiving a slot containing the control information therein, namely a control slot. Also, the control information extraction unit 1066 establishes the synchronization between frames and slots when the timing with which the slot containing the control information is received is used as a reference.

More specifically, the control information extraction unit 1066 identifies the control slots where the received demodulation result is assigned, based on the control slot information contained in the control information. Then the control information extraction unit 1066 generates frames with this identified control slot as a reference. If the control information corresponds to a third slot as shown in the FIG. 17B, the control information extraction unit 1066 will generate frames with the third slot as a reference. In other words, the control information extraction unit 1066 generates frames each containing a plurality of slots in such a manner as to synchronize with the frame corresponding to the control slot information. This corresponds to that the control information extraction unit 1066 extracts, from the control information, information on the timing of a frame and the timings of slots contained in the frame. The control information extraction unit 1066 outputs information on the thus generated frames to the slot decision unit 1068.

The slot decision unit 1068 measures, by carrier sensing, the interference power for each of a plurality of slots contained in the frame generated by the control information extraction unit 1066. Also, the slot decision unit 1068 estimates empty slots based on the interference powers. More specifically, the slot decision unit 1068 stores a predetermined threshold value in advance, and compares the interference power at each slot against the threshold value. The slot decision unit 1068 estimates slots whose interference powers are below the threshold value, as empty slots, and randomly identifies one of the estimated empty slots. Note that the slot decision unit 1068 may identify a slot whose interference power is the minimum. As a result, the slot decision unit 1068 determines a slot which is synchronized with the control slot information and which arrives in cycles of frames.

The generator 1064 generates data in such manner as to add the information, acquired by the acquisition unit 1062, to the data. That is, the generator 1064 generates data that contains the measured present position. The generator 1064 transmits, by broadcast, the data via the modem unit 1054, the RF unit 1052, and antenna 1050, using the slot identified by the slot decision unit 1068.

The first identifying unit 1074a to the third identifying unit 1074c and the decision unit 1076 carry out the processings similar to those carried out by the first identifying unit 1166a to the third identifying unit 1166c and the decision unit 1076 of FIG. 16, respectively. In addition to the processing carried out by the above-described third identify8ing unit 1166c, the third identifying unit 1074c may execute the following processing. If the variation in the received power lies within a predetermined range, it is assumed that a terminal apparatus 1014, which is the broadcast source, is travelling near the own terminal apparatus 1014 along the same direction as the own terminal apparatus 1014. Accordingly, if the positional information contained in data from the terminal apparatus 1014 of broadcast source and the positional information acquired by the acquisition unit 1062 indicate that the distance between the two positions is farther away from each other by more than a preset threshold value, the third identifying unit 1074c will detect that the terminal apparatus 1014 of broadcast source is an inappropriate apparatus. Also, if the traveling directions indicated by the both position information differ from each other by more than another threshold value, the third the third identifying unit 1074c will also detect that the terminal apparatus 1014 of broadcast source is an inappropriate apparatus. When it has been determined that the terminal apparatus 1014 of broadcast source is an inappropriate apparatus, the decision unit 1076 has the generator 1064 add the result of detection of the inappropriate apparatus by the decision unit 1076 and information on a detected location to the data.

The notification unit 1070 acquires the data sent from not-shown other terminal apparatuses 1014 and conveys the approach or the like of the not-shown other vehicles to a driver via a monitor or speaker according to the content of the data. At the same time, if the result indicating that an inappropriate apparatus has been detected and the information on a detected location are contained in the data and the information on a detected location are contained in the data and/or control information, the notification unit 1070 will convey the result. For example, the notification unit 1070 displays the information on an inappropriate apparatus and the information on a detected location together with a warning message containing characters like "WARNING". Also, the notification unit 1070 may display the content of data corresponding these items of information. Or, if the result indicating that an inappropriate apparatus has been detected and the information on a detected location are contained in the data and/or control information, the notification unit 1070 may skip conveying the content of data corresponding to these items of information. The processing performed by the notification unit 1070 is not limited thereto. The control unit 1058 controls the entire operation of the terminal apparatus 14.

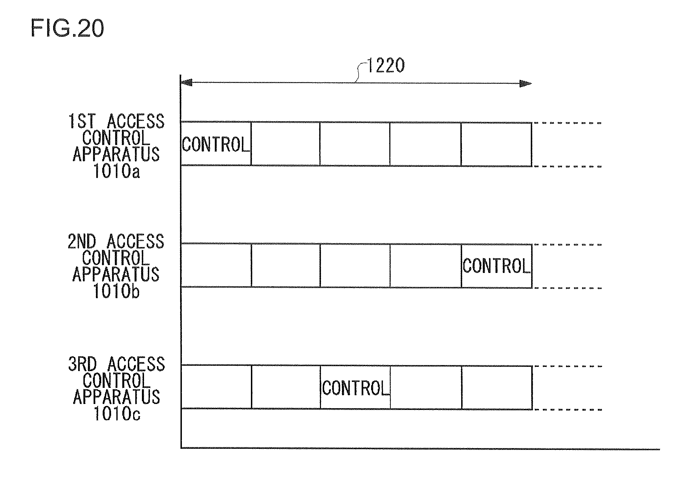

An operation of the communication system 1100 configured as above is now described. FIG. 20 shows an operational overview of the communication system 1100. The horizontal direction of FIG. 20 corresponds to time, and the first access control apparatus 1010a to the third access control apparatus 1010c are indicated along the vertical direction of FIG. 20. Only the control region 1220 in FIG. 17B is shown in FIG. 20. As described earlier, assumed herein that five control slots are assigned to the control region 1220. "Control" in FIG. 20 indicates control information. The first access control apparatus 1010a uses the leading control slot. The second access control apparatus 1010b uses the fifth control slot. The third access control apparatus 1010c uses the third control slot. As a result, the interference among the control information transmitted by broadcast from the respective access control apparatuses 1010 is reduced.

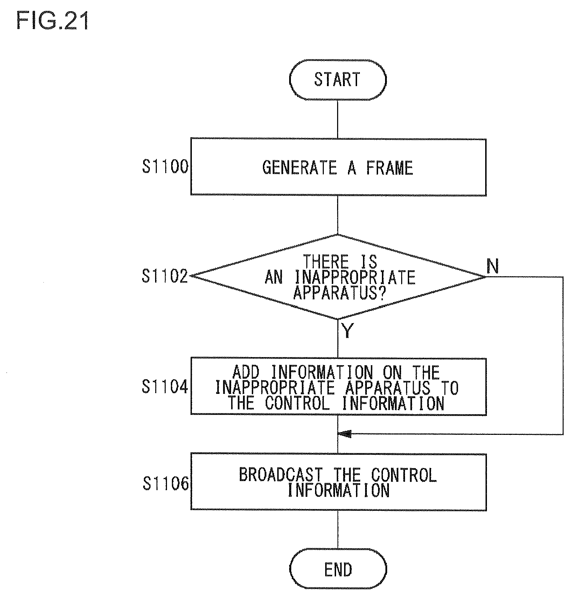

FIG. 21 is a flowchart showing a procedure in which control information is broadcast by the access control apparatus 1010. The frame generator 1160 generates frames (S1100). If the estimation unit 1164 estimates the presence of an inappropriate apparatus (Y of S1102), the processing unit 1156 will add information on the inappropriate apparatus to the control information (S1104). If the estimation unit 1164 does not estimate the presence of an inappropriate apparatus (N of S1102), Step S1104 will be skipped. The processing unit 1156, the modem unit 1154, the RF unit 1152 and the antenna 1150 broadcast the control information (S1106).

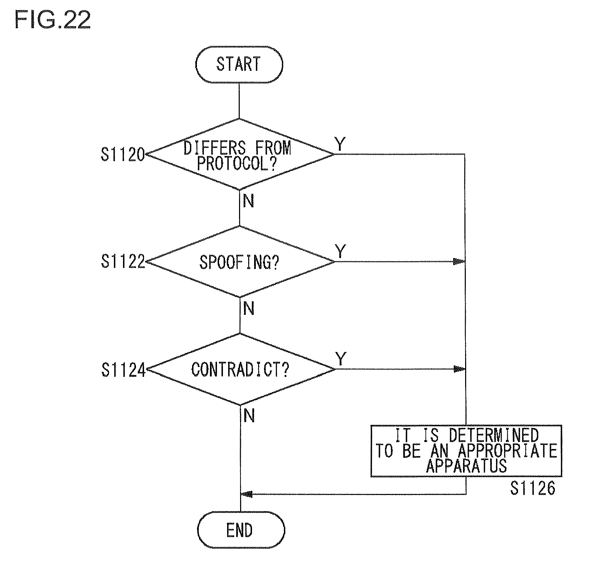

FIG. 22 is a flowchart showing a procedure in which an inappropriate apparatus is detected by the access control apparatus 1010. This corresponds to the processing of Step S1102 in FIG. 21. If the first identifying unit 1166a identifies a signal that differs from the protocol (Y of S1120), or if the second identifying unit 1166b identifies spoofing (Y of S1122), or if the third identifying unit 1166c identifies a contradiction between the received power and the data (Y of S1124), the decision unit 1168 will determine the presence of an inappropriate apparatus (S1126). If, on the other hand, the first identifying unit 1166a does not identify a signal that differs from the protocol (N of S1120), or if the second identifying unit 1166b does not identify spoofing (N of S1122), or if the third identifying unit 1166c does not identify a contradiction between the received power and the data (N of S1124), the processing will be terminated.

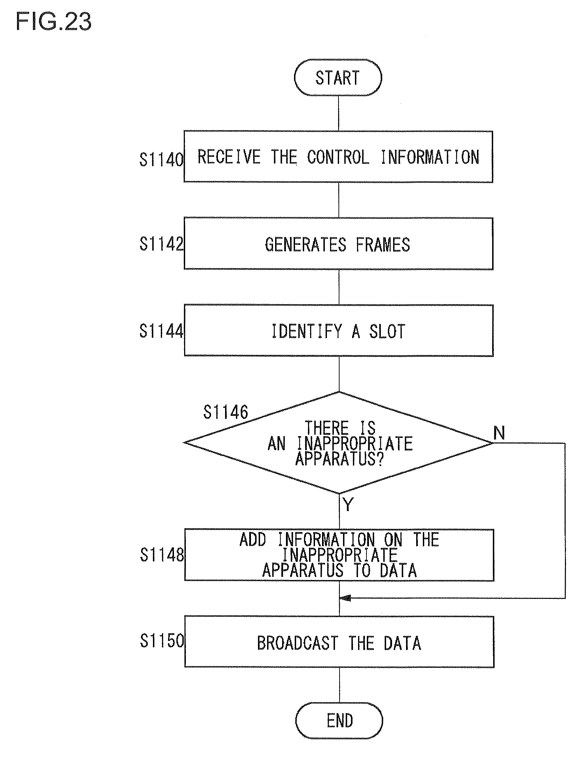

FIG. 23 is a flowchart showing a procedure in which data is broadcast by the terminal apparatus 1014. The control information extraction unit 1066 receives the control information (S1140) and generates frames (S1142) before the slot decision unit 1068 identifies slots (S1144). If the estimation unit 1072 estimates the presence of an inappropriate apparatus (Y of S1146), the generator 1064 will add information on the inappropriate apparatus to the data (S1148). If, on the other hand, the estimation unit 1072 unit does not estimate the presence of an inappropriate apparatus (N of S1146), Step S1148 will be skipped. The processing unit 1056, the modem unit 1054, the RF unit 1052 and the antenna 1150 broadcast the control information (S1150).

Still another modification is now described. Similar to the another modification, the still another modification relates to a communication system 1100 including an access control apparatus 1010 and terminal apparatuses 1014. In the another modification, the access control apparatus 1010 broadcasts the timing of a frame and the detection result of an inappropriate terminal 1014, using the control information. According to this still another modification, on the other hand, the access control apparatus 1010 broadcasts frames by adding still another information to the control information for the purpose of further reducing the collision probability of data. The access control apparatus 1010 identifies slots not used in communication among a plurality of terminal terminals (hereinafter referred to as "empty slots" or "unused slots") by measuring the received power in each slot. Note that those which may be assigned as the empty slots are those excluding the control slots. The access control apparatus 1010 identifies slots having any collision (hereinafter referred to as "collision slots") by also measuring in each slot for any collision of packet signals transmitted by the plurality of terminal apparatuses. Note also that those which may be identified as the collision slots are those excluding the control slots.

The access control apparatus 1010 also adds information on the identified empty slots and the identified collision slots to the control information. A terminal apparatus 1014 estimates empty slots based on the control information, and randomly selects a slot out of the empty slots. Further, the terminal apparatus 1014 transmits, by broadcast, the data using the selected slot. The communication system 1100 and the terminal apparatus 1014 according to the still another modification are of similar type to those described in conjunction with FIG. 15 and FIG. 19, respectively. A description is given here centering around features different from those described in conjunction with FIG. 15 and FIG. 19.

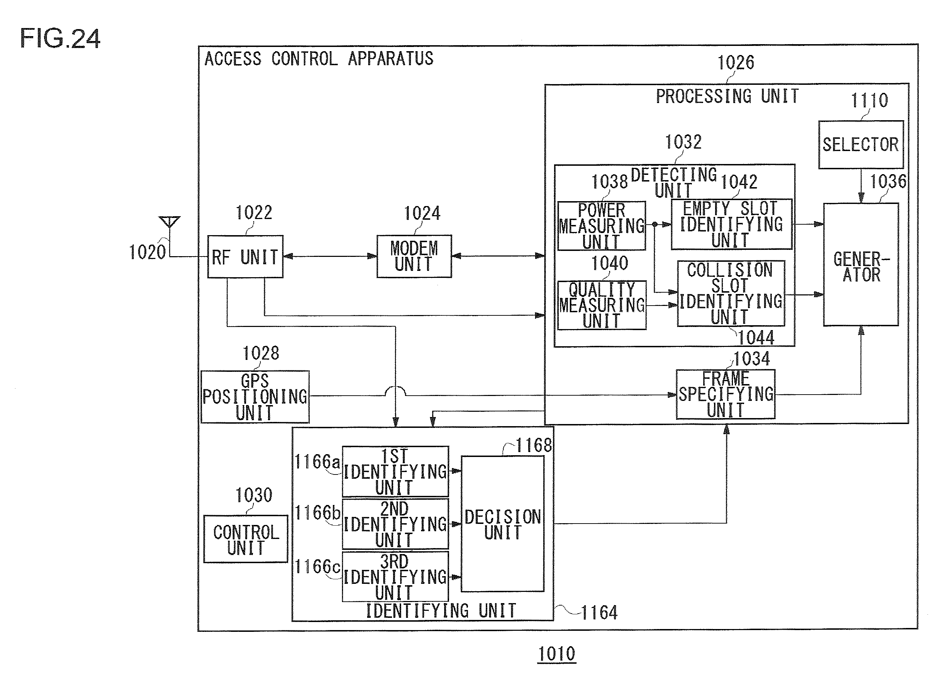

FIG. 24 shows a structure of the access control apparatus 1010 according to still another modification. The access control apparatus 1010 includes an antenna 1020, an RF unit 1022, a modem unit 1024, a processing unit 1026, a GPS positioning unit 1028, a control unit 1030, and an estimation unit 1164. The processing unit 1026 includes a detecting unit 1032, a frame specifying unit 1034, a generator 1036, and a selector 1110. The detecting unit 1032 includes a power measuring unit 1038, a quality measuring unit 1040, an empty slot identifying unit 1042, and a collision slot identifying unit 1044. The estimation unit 1164 includes a first identifying unit 1166a, a second identifying unit 1166b, and a third identifying unit 1166c, which are generically referred to as "identifying unit 1166" or "identifying units 1166", and a decision unit 1168. The antenna 1020, the RF unit 1022, the modem unit 1024, the GPS positioning unit 1028, the control unit 1030, the frame specifying unit 1034, and the estimation unit 1164 correspond respectively to the antenna 1150, the RF unit 1152, the modem unit 1154, the GPS positioning unit 1158, the control unit 1162, the frame generator 1160, and the estimation unit 1164, and therefore the repeated description thereof is omitted here. In particular, a description of the detection and broadcasting of an inappropriate terminal apparatus 1014 are omitted here.

The selector 1110 performs carrier sensing on each slot of the respective plurality of control slots in the control region 1220, and selects one control slot out of them based on the carrier sensing result. Since the processing performed by the selector 1110 is similar to that performed by the processing unit 1156 of FIG. 16, the description thereof is omitted here. The selector 1110 outputs information on the selected control slot to the generator 1036.

The power measuring unit 1038 receives a received signal from the RF unit 1022 or the modem unit 1024 and measures the received power. Note that the received power is measured slot by slot. Also, slots correspond to slots other than the control slots. Hence, the power measuring unit 1038 measures the received power for each of the plurality of slots. The power measuring unit 1038 outputs the received power for each slot to the empty slot identifying unit 1042 and the collision slot identifying unit 1044. The quality measuring unit 1040 receives the demodulation result from the modem unit 1024 and measures the signal quality for each of the plurality of slots. The signal quality measured herein is the error rate. Here, slots correspond to slots other than the control slots, too. It should be noted that known art can be used for the measurement of the error rate, so that the description thereof is omitted here. Also, instead of the error rate, EVM (Error Vector Magnitude) or the like may be measured as the signal quality. The quality measuring unit 1040 outputs the error rate to the collision slot identifying unit 1044.

The empty slot identifying unit 1042 receives the received power for each slot from the power measuring unit 1038. The empty slot identifying unit 1042 compares each received power against a threshold value (hereinafter referred to as "threshold value for empty slot") and identifies the slot for which the received power is smaller than the threshold value for empty slot. That is, the empty slot identifying unit 1042 detects, from among a plurality of slots other than those contained in the control region 1220, a slot that can be used in communication among a plurality of terminal apparatuses, as an empty slot. Note here that when there are a plurality of empty slots, the empty slot identifying unit 1042 identifies them as empty slots. The empty slot identifying unit 1042 outputs information on the identified empty slots to the generator 1036.

The collision slot identifying unit 1044 receives the received power for each slot from the power measuring unit 1038 and receives the error rate for each slot from the quality measuring unit 1040. Also, the collision slot identifying unit 1044 associates the received power with the error rate, slot by slot. The collision slot identifying unit 1044 not only compares the received power against a first threshold value, but also compares the error rate against a second threshold value, slot by slot. The collision slot identifying unit 1044 identifies, as a collision slot, a slot for which the received power is larger than the first threshold value and at the same time the error rate is higher than the second threshold value. That is, the collision slot identifying unit 1044 recognizes, as a collision slot, a slot for which the received power is large but the communication quality is inferior. In this manner, the collision slot identifying unit 1044 detects, as a collision slot, a slot in which a collision has occurred due to duplicate transmission of signals sent from a plurality of terminal apparatuses. The collision slot identifying unit 1044 outputs information on the identified collision slots to the generator 1036.

The generator 1036 receives information on empty slots from the empty slot identifying unit 1042 and also receives information on collision slots from the collision slot identifying unit 1044. The generator 1036 generates control information by adding the information on empty slots and the information on collision slots thereto. Note here that the numbers, 1, 2, ... from the start (hereinafter referred to as "slot numbers") are given respectively to a plurality of slots contained in a frame. The generator 1036 adds the slot number(s) of the empty slot(s) contained in the previous frame(s) as information on empty slots to the control information. Further, as the generator 1036 receives (1) the detection result that the an inappropriate terminal apparatus has been detected by the decision unit 1168 and (2) information on the detected location, the generator 1036 stores these pieces of information in the control information, too. Also, the generator 1036 receives information on frames and slots from the frame specifying unit 1034. The generator 1036 periodically assigns the control information to any one of control slots. The generator 1036 outputs the control information to the modem unit 1024, using the thus assigned control slot.

In the another modification, the slot decision unit 1068 of the terminal apparatus 1014 estimates empty slots based on the carrier sensing result. According to the still another modification, in contrast thereto, the slot decision unit 1068 estimates empty slots based on the information on empty slots and/or the information on collision slots contained in the control information. A description is given herein of processing performed by the terminal apparatus 1014 according to the still another modification.

The control information extraction unit 1066 receives the control information fed from the modem unit 1054. The control information extraction unit 1066 acquires the information on empty slots and the information on collision slots from the control information. The control information extraction unit 1066 outputs the information on empty slots and the information on collision slots to the slot decision unit 1068. The slot decision unit 1068 receives the information on empty slots and the information on collision slots from the control information extraction unit 1066. The slot decision unit 1068 selects empty slot(s) from among the slots excluding those of the control region 1220 in each frame.

While such processing continues, the control information extraction unit 1066 continues to extract the information on empty slots and the information on collision slots, from the control information, frame by frame. Based on the information on collision slots, the slot decision unit 1068 checks to see if any of the slot numbers corresponding to the slots in current use is mistaken as a collision slot. If no slot is mistaken as a collision slot, the slot decision unit 1068 will continue to output the same slot numbers as before to the generator 1064. If, on the other hand, any slot is mistaken as a collision slot, the slot decision unit 1068 will again estimate empty slots based on the information on empty slots. In other words, the slot decision unit 1068 repeats the previous processing.

If the control information received by the control information extraction unit 1066 does not contain the information on empty slots, the slot decision unit 1068 may execute the operation described in the another modification. This corresponds to a case where broadcast is not the control information from the access control apparatus 1010 of FIG. 24 but the control information from the access control apparatus 1010 of FIG. 16. In this case, the slot decision unit 1068 performs carrier sensing on each of a plurality of slots contained in the frame generated by the control information extraction unit 1066. If the control information extraction unit 1066 does not receive the information on empty slots, the slot decision unit 1068 will estimate empty slots based on the carrier sensing execution result.

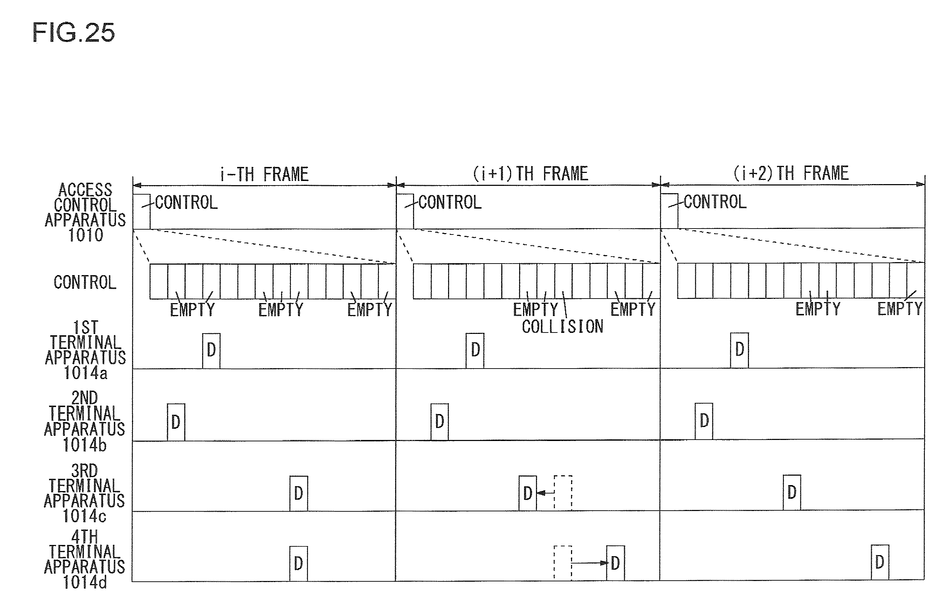

FIG. 25 shows an operational overview of the communication system 1100 according to the still another modification. The horizontal direction of FIG. 25 corresponds to time, and three frames that are an *i*th frame to an (i+2)th frame are indicated as described in the top row. Assume herein for the clarity of description that the number of control slots contained in each frame is one and each frame contains 15 slots. As shown in FIG. 25, the access control apparatus 1010 broadcasts the control information using the leading slot of each frame. "Control" in FIG. 25 indicates control information. Below "control", information on empty slots and information on collision slots both contained in the control information are indicated by associating them with slots. "Empty" in FIG. 25 indicates an empty slot, whereas "collision" in FIG. 25 indicates a collision slot.

In the rows below the top row, the timings with which the first terminal apparatus 1014a to the fourth terminal apparatus 1014d broadcast the data are indicated. "D" in FIG. 25 means data. The first terminal apparatus 1014a to the fourth terminal apparatus 1014d each references the control information and selects an empty slot. The first terminal apparatus 1014a to fourth terminal apparatus 14d each broadcasts the data using the selected empty slot in the ith frame. Since the empty slot selected by the third terminal apparatus 1104c is identical to the empty slot selected by the fourth terminal apparatus 1014d, the data broadcast from them collide with each other. The access control apparatus 1010 detects the occurrence of collision in said slot. The control information, broadcast from the access control apparatus 1010, in the (i+1)th frame indicates the slot where the collision occurs, as the information on the collision slot.

Since no collision occurs in the slots used by the first terminal apparatus 1014a and the second terminal apparatus 1014b, the slots having the same slot numbers are used again. On the other hand, since collision has occurred in the slots used by the third terminal apparatus 1014c and the fourth terminal apparatus 1014d, different empty slots are selected again. The third terminal apparatus 1014c and the fourth terminal apparatus 1014d broadcast the data, using the selected empty slots. Since not all of data collides, the collision slots are not indicated in the control information, broadcast from the access control apparatus 1010, in the (i+2)th frame. Thus, the first terminal apparatus 1014a to the fourth terminal apparatus 1014d use again the slots, having the same slot numbers as the slots used already, in the (i+2)th frame.

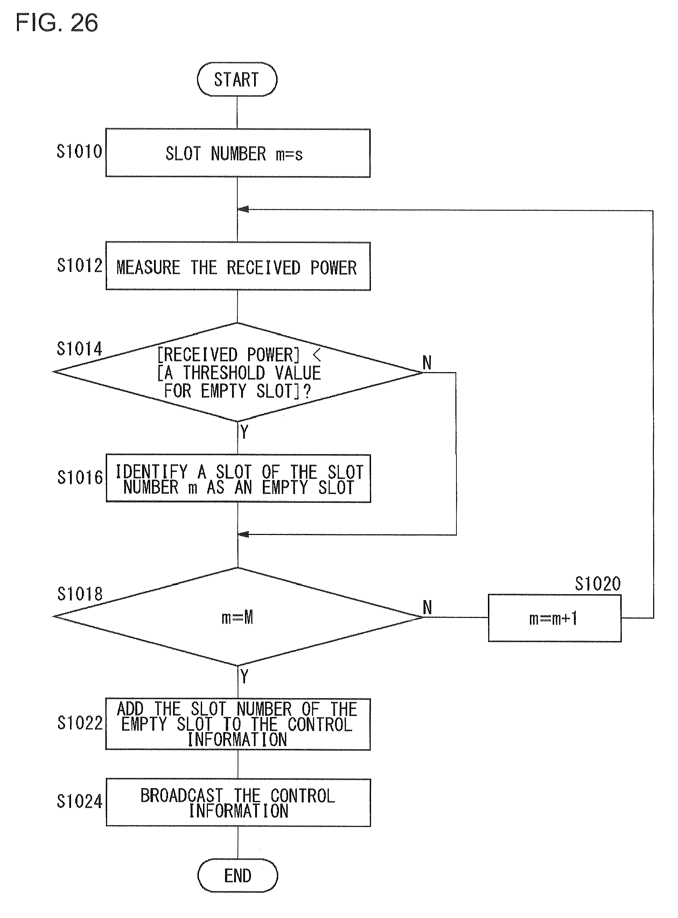

FIG. 26 is a flowchart showing a procedure in which the access control apparatus 1010 conveys an empty slot. The detecting unit 1032 sets the slot number m to "s" (S1010). The power measuring unit 1038 measures the received power (S1012). If the received power is less than the threshold value for empty slot (Y of S1014), the empty slot identifying unit 1042 will identify the slot of the slot number m as an empty slot (S1016). If the received power is not less than the threshold value for empty slot (N of S1014), the empty slot identifying unit 1042 will skip the process of Step S1016. If the slot number m is not equal to the maximum number M (N of S1018), the detecting unit 1032 will increment the slot number m by 1 (S1020) and the process will return to Step S1012. If, on the other hand, the slot number m is the maximum number M (Y of S1018), the generator 1036 will add the slot number of the empty slot to the control information (S1022). The modem unit 1024 and the RF unit 1022 broadcast the control information (S1024).

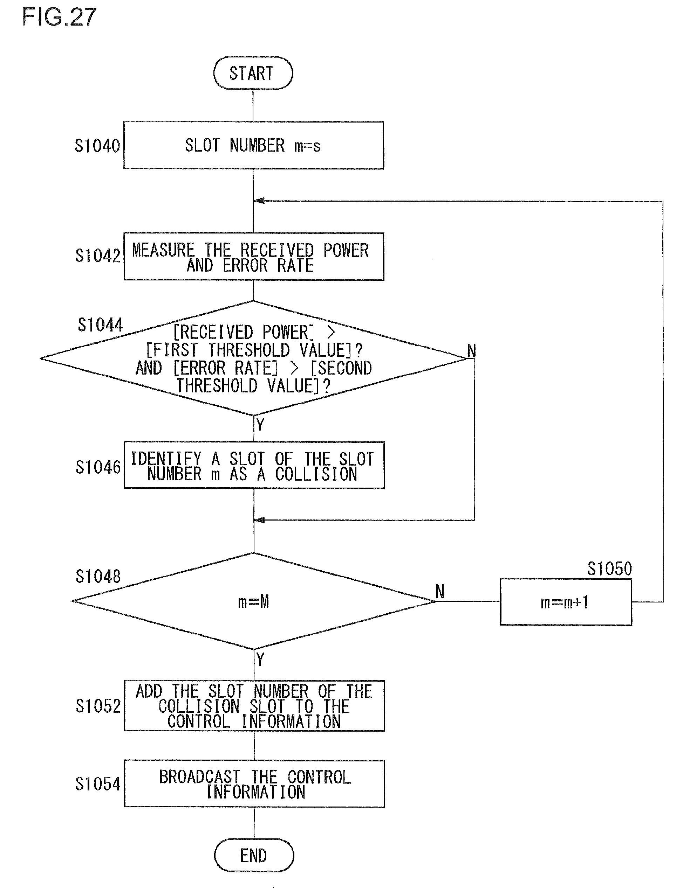

FIG. 27 is a flowchart showing a procedure in which the access control apparatus 1010 conveys a collision slot. The detecting unit 1032 sets the slot number m to "s" (S1040). The power measuring unit 1038 measures the received power, and the quality measuring unit 1040 measures the error rate (S1042). If the received power is greater than the first threshold value and the error rate is greater than the second threshold value (Y of S1044), the collision slot identifying unit 1044 will identify the slot of the slot number m as a collision slot (S1046). If the received power is not greater than the first threshold value or the error rate is not greater than the second threshold value (N of S1044), the collision slot identifying unit 1044 will skip the process of Step S1046. If the slot number m is not equal to the maximum number M (N of S1048), the detecting unit 1032 will increment the slot number m by 1 (S1050) and the process will return to Step S1042. If, on the other hand, the slot number m is the maximum number M (Y of S1048), the generator 1036 will add the slot number of the collision slot to the control information (S1052). The modem unit 1024 and the RF unit 1022 broadcast the control information (S1054).

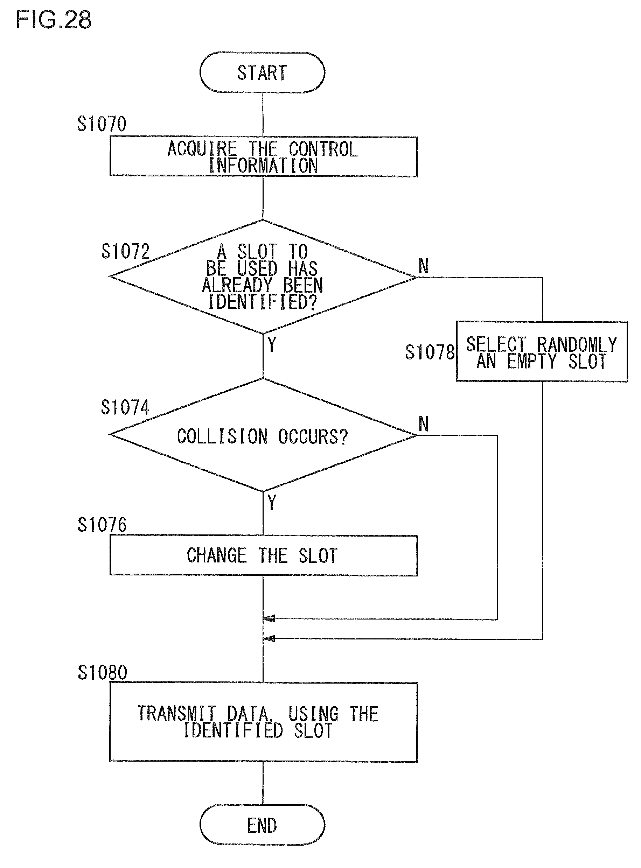

FIG. 28 is a flowchart showing a data transmission procedure performed by the terminal apparatus 1014 according to still another modification. The control information extraction unit 1066 acquires the control information (S1070). If a slot to be used has already been identified (Y of S1072), the slot decision unit 1068 will verify whether collision occurs in this slot or not. If collision occurs (Y of S1074), the slot decision unit 1068 will change the slot (S1076). If no collision occurs (N of S1074), Step S1076 will be skipped. If, on the other hand, a slot to be used has not already been identified (N of S1072), the slot decision unit 1068 will estimate empty slots and then randomly identify an empty slot (S1078). The generator 1064 transmits the data, using the thus identified slot (S1080).

By employing the exemplary embodiments of the present invention, the received power and the quality of data broadcast periodically in compliance with the above-described prescription. Thus, faulty terminal apparatuses can be detected while complying with the prescribed definition and rules. Also, "being in motion" is added to the detection condition, so that the objects to be detected are limited to terminal apparatuses mounted on vehicles. Since the objects to be detected are limited, the degree of detection accuracy can be improved. The detection result that a malfunctioning terminal apparatus has been detected is broadcast, so that the effect due to the signals sent from the malfunctioning apparatus can be reduced. Also, even though the received power is large, the degradation in quality is additionally set as a detection criterion, data likely to adversely affect other terminal apparatus can be detected.

Data is broadcast using the slots generated according to the control information conveyed from the access control, so that synchronization can be established between a plurality of terminal apparatuses. Also, since synchronization can be established between a plurality of terminal apparatuses, the collision probability of data can be reduced. Also, since the data is broadcast within slots, the occurrence of situations where parts of a plurality of data overlap and thereby collide with each other can be reduced. Also, since the data is broadcast within slots, the usage efficiency of frame can be improved. Also, empty slots are estimated and any of them is/are selected, so that the collision probability of packet signals can be reduced even when the communication volume has increased. Also, the empty slots are estimated based on the carrier sensing result, so that the empty slots suitable for the surroundings of a terminal apparatus can be estimated.

Also, the empty slots are estimated based on the control information, so that the empty slots suitable for the surroundings of the access control apparatus can be estimated. Also, carrier sensing is performed if the information on empty slots is not contained in the control information, so that the processing according to various access control apparatuses can be carried out. Also, the identification carriers in the control information are not used for data, whereas the remaining subcarriers are also used for data. Thus, even if the control information and data signals collide, the presence of the control information can be detected by observing the signal components of the control information. Also, the guard band is provided between the identification carrier and the other subcarriers, so that the interference therebetween can be reduced and the probability of arrival of information transmitted using the identification carriers can be improved. Also, important information is assigned to the identification carrier, so that the probability of arrival of important information can be improved. Also, the UW is assigned to the identification carrier, so that the degree of accuracy in detecting the identification carriers can be improved.

Also, the control region is reserved for control slots in a plurality of slots contained in each frame. Thus, the interference between the control information and the data can be reduced. Also, a plurality of control slots are assigned to the control region, so that the interference between a plurality of pieces of control information from a plurality of access control apparatuses can be reduced.
Also, since the interference therebetween is reduced, the deterioration in the quality of the control information can be suppressed. Also, since the deterioration in the quality of the control information is suppressed, the contents of control information can be transmitted accurately. Also, since the interference between a plurality of pieces of control information is reduced, a plurality of access control apparatuses can be installed. Also, since a plurality of access control apparatuses are installed, the collision probability of packet signals occurring at each intersection can be reduced. Also, control slots not used by other access control apparatuses are estimated, so that the interference between a plurality of pieces of control information can be reduced.

Also, the slots usable in communication between a plurality of terminal apparatuses are broadcast from among a plurality of slots. Thus the probability of collisions occurring in communication between the plurality of terminal apparatuses can be reduced. Also, since the probability of collisions occurring in communication between the plurality of terminal apparatuses is reduced, the collision probability of packet signals under the conditions of increased volume can be reduced. Also, empty slots are identified based on the received powers of a plurality of slots, respectively, so that the empty slots can be easily identified. Also, the slot number of an empty slot which is contained in a previous frame is broadcast, so that the instructions to the terminal apparatuses can be executed reliably. Also, a terminal apparatus, which is using the empty slot, uses a slot that corresponds to said slot, over a plurality of frames, so that the processing can be simplified. Also, the access control apparatus does not directly participate in the data communication between terminal apparatuses but only conveys a parameter related to the empty slots. Hence, the structure and operation according to the exemplary embodiments and embodiments are easily applicable to a communication system premised on CSMA/CA, too.

Also, the slot in which a collision has occurred due to duplicate transmission of signals from the plurality of terminal apparatuses is broadcast. Thus, the probability of collisions occurring in communication between the plurality of terminal apparatuses can be reduced. Also, the collision slots are identified based on the received powers of the plurality of slots, respectively, and the signal qualities of the plurality of slots, respectively, so that the collision slots can be easily identified. Also, the slot number of a collision slot which is contained in a previous frame is broadcast, so that the instructions to the terminal apparatuses can be executed reliably. Also, the access control apparatus does not directly participate in the data communication between terminal apparatuses but only conveys a parameter related to the collision slots. Hence, the structure and operation according to the exemplary embodiments and embodiments are easily applicable to a communication system premised on CSMA/CA, too.

Also, the demodulated signals are used for the detection, so that a signal being used to alter the content can be identified. Also, since the signal being used to alter the content is identified, a terminal apparatus which has been intentionally altered can be identified. Also, whenever the intentionally altered terminal apparatus is identified, the detection result indicating that such an intentionally altered terminal has been identified is broadcast. Thus, the adverse effect of signals sent from such an intentionally altered terminal apparatus can be reduced. Also, whenever the receiving state and the content of data contradict with each other, it is detected that the terminal apparatus of broadcast source is an inappropriate apparatus. Thus the degree of detection accuracy can be improved. Also, whenever the demodulated signal does not fit into the construction of frame or slot, it is detected that the terminal apparatus of broadcast source is an inappropriate terminal. Thus a terminal apparatus whose operation timing has been intentionally altered can be identified.

Also, since the presence of a terminal apparatus whose operation timing has been intentionally altered is broadcast, the adverse effect of signals sent from such an intentionally altered terminal apparatus can be reduced. Also, whether the same identification number contained in data is used more than once within each frame or not is checked, so that a spoofing terminal apparatus can be identified. Also, the presence of the spoofing terminal apparatus is broadcast, so that the adverse effect of signals sent from such a spoofing terminal apparatus can be reduced. When the content of data sent from an inappropriate terminal apparatus is broadcast, warning messages or the like are sent together and therefore the incident of accidents can be suppressed.

Also, data is broadcast using the slots generated according to the control information conveyed from the access control, so that synchronization can be established between a plurality of terminal apparatuses. Also, since synchronization can be established between a plurality of terminal apparatuses, the collision probability of data can be reduced. Also, since the data is broadcast within slots, the occurrence of situations where parts of a plurality of data overlap and thereby collide with each other can be reduced. Also, since the data is broadcast within slots, the usage efficiency of frame can be improved. Also, empty slots are estimated and any of them is/are selected, so that the collision probability of packet signals can be reduced even when the communication volume has increased. Also, the empty slots are estimated based on the carrier sensing result, so that the empty slots suitable for the surroundings of a terminal apparatus can be estimated.

Also, the empty slots are estimated based on the control information, so that the empty slots suitable for the surroundings of the access control apparatus can be estimated. Also, carrier sensing is performed if the information on empty slots is not contained in the control information, so that the processing according to various access control apparatuses can be carried out. Also, the identification carriers in the control information are not used for data, whereas the remaining subcarriers are also used for data. Thus, even if the control information and data signals collide, the presence of the control information can be detected by observing the signal components of the control information. Also, the guard band is provided between the identification carrier and the other subcarriers, so that the interference therebetween can be reduced and the probability of arrival of information transmitted using the identification carriers can be improved. Also, important information is assigned to the identification carrier, so that the probability of arrival of important information can be improved. Also, the UW is assigned to the identification carrier, so that the degree of accuracy in detecting the identification carriers can be improved.

Also, the control region is reserved for control slots in a plurality of slots contained in each frame. Thus, the interference between the control information and the data can be reduced. Also, a plurality of control slots are assigned to the control region, so that the interference between a plurality of pieces of control information from a plurality of access control apparatuses can be reduced. Also, since the interference therebetween is reduced, the deterioration in the quality of the control information can be suppressed. Also, since the deterioration in the quality of the control information is suppressed, the contents of control information can be transmitted accurately. Also, since the interference between a plurality of pieces of control information is reduced, a plurality of access control apparatuses can be installed. Also, since a plurality of access control apparatuses are installed, the collision probability of packet signals occurring at each intersection can be reduced. Also, control slots not used by other access control apparatuses are estimated, so that the interference between a plurality of pieces of control information can be reduced.

Also, the slots usable in communication between a plurality of terminal apparatuses are broadcast from among a plurality of slots. Thus the probability of collisions occurring in communication between the plurality of terminal apparatuses can be reduced. Also, since the probability of collisions occurring in communication between the plurality of terminal apparatuses is reduced, the collision probability of packet signals under the conditions of increased volume can be reduced. Also, empty slots are identified based on the received powers of a plurality of slots, respectively, so that the empty slots can be easily identified. Also, the slot number of an empty slot which is contained in a previous frame is broadcast, so that the instructions to the terminal apparatuses can be executed reliably. Also, a terminal apparatus, which is using the empty slot, uses a slot that corresponds to said slot, over a plurality of frames, so that the processing can be simplified. Also, the access control apparatus does not directly participate in the data communication between terminal apparatuses but only conveys a parameter related to the empty slots. Hence, the structure and operation according to the exemplary embodiments and embodiments are easily applicable to a communication system premised on CSMA/CA, too.

Also, the slot in which a collision has occurred due to duplicate transmission of signals from the plurality of terminal apparatuses is broadcast. Thus, the probability of collisions occurring in communication between the plurality of terminal apparatuses can be reduced. Also, the collision slots are identified based on the received powers of the plurality of slots, respectively, and the signal qualities of the plurality of slots, respectively, so that the collision slots can be easily identified. Also, the slot number of a collision slot which is contained in a previous frame is broadcast, so that the instructions to the terminal apparatuses can be executed reliably. Also, the access control apparatus does not directly participate in the data communication between terminal apparatuses but only conveys a parameter related to the collision slots. Hence, the structure and operation according to the exemplary embodiments and embodiments are easily applicable to a communication system premised on CSMA/CA, too.

The present invention has been described based on the exemplary embodiments. The exemplary embodiments are intended to be illustrative only, and it is understood by those skilled in the art that various modifications to constituting elements and processes as well as arbitrary combinations thereof could be further developed and that such modifications and combinations are also within the scope of the present invention.

In the exemplary embodiments of the present invention, the frame generator 160 specifies frames each of which is constituted by a plurality of slots. However, this should not be considered as limiting and, for example, the frame generator 160 may provide periods (fields) other than the plurality of slots, in each frame. More specifically, a plurality of slots may be assigned in a partial period of a frame, whereas the CSMA/CA scheme may be used in communication between a plurality of terminal apparatuses 14 in the remaining periods. In such a case, the access control apparatus does not detect the empty slots and the collision slots while the CSMA/CA scheme is in use. According to this modification, each terminal apparatus 14 can select the communication mode between a communication using slots and a communication using the CSMA/CA scheme. Hence, the degree of freedom in communications can be increased. In other words, it suffices that each frame at least contains a plurality of slots.

In the exemplary embodiments of the present invention, the control information broadcast from the access control apparatus 10 and the data broadcast from a terminal apparatus 14 are each assigned to a single slot. However, this should not be considered as limiting and, for example, the control information and the data may each be assigned to two or more slots. According to this modification, the transmission rate of control information and data can be increased.

In the exemplary embodiments of the present invention, an identification carrier is equivalent to two subcarriers. Also, the identification carrier is assigned to the subcarriers near the center frequency of an OFDM symbol. However, this should not be considered as limiting and, for example, the identification carrier may be equivalent to more than two subcarriers. For example, the identification carrier may be assigned to subcarriers other than those near the center frequency of an OFDM symbol. In such a case, the information on empty slots and/or the information on collision slots may be added to the identification carriers. According to this modification, the communication system 100 can be designed more freely.

In the exemplary embodiments of the present invention, the identifying unit 164 and the identifying unit 72 are provided with the estimation unit 166 and the estimation unit 74, respectively. However, this should not be considered as limiting and, for example, the estimation unit 166 and the estimation unit 74 may not be provided at the identifying unit 164 and the identifying unit 72. In such a case, the decision unit 168 and the decision unit 76 each detects a malfunctioning terminal apparatus 14, using the received power and the quality. According to this modification, the processing can be simplified.

In the exemplary embodiments of the present invention, the identifying unit 164 and the identifying unit 72 each processes data received in cycles of frames. However, this should not be considered as limiting and, for example, the identifying unit 164 and the identifying unit 72 each may process data received periodically instead of data received in cycles of frames. This corresponds to a situation where the cycle of data broadcast from a terminal apparatus 14 is displaced from the frame's cycle when the timing control function in this terminal apparatus 14 of broadcast source is malfunctioning. The identifying unit 164 and the identifying unit 72 each processes data of the same identification number, based on the identification numbers contained in the data. According to this modification, a terminal apparatus 14 whose timing control function is malfunctioning can be detected.

In the exemplary embodiments of the present invention, the frame generator 1160 specifies frames each of which is constituted by a plurality of slots. However, this should not be considered as limiting and, for example, the frame generator 1160 may provide periods (fields) other than the plurality of slots, in each frame. More specifically, a plurality of slots may be assigned in a partial period of a frame, whereas the CSMA/CA scheme may be used in communication between a plurality of terminal apparatuses 14 in the remaining periods. In such a case, the access control apparatus does not detect the empty slots and the collision slots while the CSMA/CA scheme is in use. According to this modification, each terminal apparatus 1014 can select the communication mode between a communication using slots and a communication using the CSMA/CA scheme. Hence, the degree of freedom in communications can be increased. In other words, it suffices that each frame at least contains a plurality of slots.

In the exemplary embodiments of the present invention, the control information broadcast from the access control apparatus 1010 and the data broadcast from a terminal apparatus 1014 are each assigned to a single slot. However, this should not be considered as limiting and, for example, the control information and the data may each be assigned to two or more slots. According to this modification, the transmission rate of control information and data can be increased.

In the exemplary embodiments of the present invention, an identification carrier is equivalent to two subcarriers. Also, the identification carrier is assigned to the subcarriers near the center frequency of an OFDM symbol. However, this should not be considered as limiting and, for example, the identification carrier may be equivalent to two or more subcarriers. For example, the identification carrier may be assigned to subcarriers other than those near the center frequency of an OFDM symbol. In such a case, the information on empty slots and the information on collision slots may be added to the identification carrier. According to this modification, the communication system 1100 can be designed more freely.

### DESCRIPTION OF THE REFERENCE NUMERALS

- 10: Access control apparatus
- 12: Vehicle
- 14: Terminal apparatus
- 50: Antenna
- 52: RF unit
- 54: Modem unit
- 56: Processing unit
- 58: Control unit
- 60: Timing identifying unit
- 62: Acquisition unit
- 64: Generator
- 66: Control information extraction unit
- 68: Slot decision unit
- 70: Notification unit
- 72: Identifying unit
- 74: Estimation unit
- 76: Decision unit
- 100: Communication system
- 150: Antenna
- 152: RF unit
- 154: Modem unit
- 156: Processing unit
- 158: GPS positioning unit
- 160: Frame generator
- 162: Control unit
- 164: Identifying unit
- 166: Estimation unit
- 168: Decision unit

### INDUSTRIAL APPLICABILITY

The present invention reduces the influence by signals sent from a malfunctioning terminal apparatus.

## Claims

1. A radio apparatus, comprising:
a receiver configured to receive periodically a signal broadcast by another radio apparatus;
a detector configured to detect a malfunction in the another radio apparatus from which the signal received periodically by said receiver has been broadcast, when the quality of the signal received periodically by said receiver is more deteriorated than a second threshold value even though the intensity of the signal received periodically by said receiver is larger than a first threshold value; and
a broadcasting unit configured to broadcast a signal containing a detection result that the malfunction has been detected by said detector and information on a detected location.

2. A radio apparatus according to Claim 1, wherein said receiver is such that it is specified that a frame containing at least a plurality of slots is repeated and such that the signal is received at least in cycles of the frames.

3. A radio apparatus according to Claim 1 or Claim 2, further comprising an estimation unit configured to estimate that the another radio apparatus, from which the signal received by said receiver has been broadcast, is moving,
wherein when the another radio apparatus, from which the signal received by said receiver has been broadcast, moves and when the quality of the signal received periodically by said receiver is more deteriorated than the second threshold value even though the intensity of the signal received periodically by said receiver is larger than the first threshold value, said detector detects the malfunction in the another radio apparatus.

4. A broadcasting method, comprising:
receiving periodically a signal broadcast by another radio apparatus;
detecting a malfunction in the another radio apparatus from which the signal received periodically has been broadcast, when the quality of the signal received periodically is more deteriorated than a second threshold value even though the intensity of the signal received periodically is larger than a first threshold value; and
broadcasting a signal containing a detection result that the malfunction has been detected and information on a detected location.

5. A radio apparatus, comprising:
a receiver configured to receive a signal broadcast by another radio apparatus;
a demodulation unit configured to demodulate the signal received by said receiver;
a detector configured to detect, based on the signal demodulated by said demodulation unit, whether the another radio apparatus, from which the signal has been broadcast, is inappropriate or not; and
a broadcasting unit configured to broadcast a signal containing a detection result that the inappropriate apparatus has been detected and information on a detected location.

6. A radio apparatus according to Claim 5, wherein when a receiving state of the signal received by said receiver and a content of the signal demodulated by said demodulation unit contradict with each other, said detector detects that the another radio apparatus is inappropriate.

7. A radio apparatus according to Claim 5, wherein when it is specified that a frame containing at least a plurality of slots is repeated, said broadcasting unit broadcasts the signal using at least one slot selected from among the plurality of slots, and
wherein when the demodulated signal does not comply with the specification, said detector detects that the another radio apparatus is inappropriate.

8. A radio apparatus according to Claim 5, wherein when it is specified that a frame containing at least a plurality of slots is repeated, said broadcasting unit broadcasts a signal containing an identification number of said radio apparatus, using at least one slot selected from among the plurality of slots, and
wherein when it is estimated, based on the identification number contained in the demodulated signal and the specification, that another radio apparatus, from which said signal has been broadcast, pretends to be a radio apparatus different from own radio apparatus, said detector detects that the another radio apparatus is inappropriate.

9. A broadcasting method, comprising:
receiving a signal broadcast by another radio apparatus;
demodulating the received signal;
detecting, based on the demodulated signal, whether the another radio apparatus, from which the signal has been broadcast, is inappropriate or not; and
broadcasting a signal containing a detection result that the inappropriate apparatus has been detected and information on a detected location.

10. A radio apparatus, comprising:
a receiver configured to receive a signal broadcast by another radio apparatus;
a detector configured to detect, based on the signal received by said receiver, whether the another radio apparatus broadcasts a non-normal signal or not; and
a broadcasting unit configured to broadcast the existence of non-normality when said detector has detected the another radio apparatus broadcasting the non-normal signal.
